(19) Europäisches Patentamt
European Patent Office
Office européen des brevets

(11) EP 4 286 476 B1

(12) EUROPEAN PATENT SPECIFICATION

(45) Date of publication and mention of the grant of the patent:
**22.01.2025 Bulletin 2025/04**

(21) Application number: **22176447.5**

(22) Date of filing: **31.05.2022**

(51) International Patent Classification (IPC):
***C08L 23/12*** *(2006.01)*

(52) Cooperative Patent Classification (CPC):
(C-Sets available)
**C08L 23/12;** C08L 2205/02; C08L 2205/025; C08L 2205/035; C08L 2207/02 (Cont.)

# (54) GLASS FIBER COMPOSITE

GLASFASERVERBUNDSTOFF

COMPOSITE DE FIBRE DE VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2023 Bulletin 2023/49**

(73) Proprietor: **Borealis AG**
**1020 Vienna (AT)**

(72) Inventors:
- **Wang, Jingbo**
  **4021 Linz (AT)**
- **Gahleitner, Markus**
  **4021 Linz (AT)**
- **Bernreitner, Klaus**
  **4021 Linz (AT)**
- **Leskinen, Pauli**
  **06101 Porvoo (FI)**
- **Grestenberger, Georg**
  **4021 Linz (AT)**
- **Albrecht, Andreas**
  **4021 Linz (AT)**

(74) Representative: **Maiwald GmbH**
**Elisenhof**
**Elisenstraße 3**
**80335 München (DE)**

(56) References cited:
**EP-A1- 2 308 923**
**EP-A1- 3 112 417**
**WO-A1-2013/149915**
**WO-A1-2016/101139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/12, C08L 23/16, C08L 51/06, C08K 7/14**

## Description

The present invention is directed to a fiber reinforced composite comprising a polypropylene, a heterophasic propylene copolymer and glass fibers as well as to articles comprising said fiber reinforced composite.

Polypropylene is a material used in a wide variety of technical fields, and reinforced polypropylenes have in particular gained relevance in fields previously exclusively relying on non-polymeric materials, in particular metals. One particular example of reinforced polypropylenes are glass fiber reinforced polypropylene composites. Such materials enable tailoring of the properties of the composites by selecting the type of polypropylene, the amount of glass fiber and sometimes by selecting the type of compatibilizer used. Accordingly, nowadays glass fiber reinforced polypropylene composites are a well-established materials for applications requiring high stiffness, heat deflection resistance and impact resistance. However, one drawback of the commercial available fiber reinforced polypropylene composites is their rather high emission caused by rather high amount of oligomers obtained as side product in the polymerization process and a possibly necessary radical-induced degradation, commonly called visbreaking, to increase the melt flow rate ($MFR_2$) and processability. This is related to the fact that not only the end properties of the fiber reinforced polypropylene composites need to be considered, but also the manufacture of articles made therefrom in an efficient way, i.e. the flowability of the composite must be rather high.

Accordingly, there is the need for glass fiber reinforced polypropylene composites being stiff and having rather high heat deflection resistance paired with low emissions and which can be further processed with a high throughput rate.

The finding of the present invention is that the fiber reinforced polypropylene composite must comprise a metallocene catalysed polypropylene having a broad molecular weight distribution and a Ziegler-Natta catalysed heterophasic propylene copolymer. Hence it is preferred that both polymers have not been visbroken, i.e. not modified in a radical-induced process to reduce the molecular weight.

Accordingly, the present invention is directed to a fiber reinforced composite comprising

(a) 30 to 60 wt.-%, based on the fiber reinforced composite, of a polypropylene (PP1),
(b) 10 to 40 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 10 to 40 wt.-%, based on the fiber reinforced composite, of glass fibers (GF), and
(d) 0.05 to 5.0 wt.-%, based on the fiber reinforced composite, of a compatibilizer (CA), the total amount of the polypropylene (PP1), the heterophasic propylene copolymer (HECO), the glass fibers (GF) and the compatibilizer (CA) in the fiber reinforced composite being at least 95 wt.-%,

wherein further the polypropylene (PP1) has

(i) a melt flow rate $MFR_2$ (230 °C, 2.16 kg) measured according to ISO 1133 in the range of 40.0 to 250 g/10min,
(ii) a comonomer content determined by $^{13}C$-NMR spectroscopy of not more than 0.5 wt.-%, the comonomer if present being ethylene,
(iii) a molecular weight distribution (MWD) determined by gel permeation chromatography (GPC) in the range of more than 4.5 to below 8.5, and
(iv) 2,1 regio-defects determined by $^{13}C$-NMR spectroscopy in the range of 0.20 to 1.00 %, wherein still further the propylene homopolymer (H-PP2) of the heterophasic propylene copolymer (HECO) has
(v) 2,1 regio-defects determined by $^{13}C$-NMR spectroscopy in the range of 0 to below 0.10 %.

Further preferred embodiments of such a composite are defined in the claims dependent on claim 1 and are also defined in more detail below.

The present invention is also directed to articles, preferably automotive article, comprising at least 95 wt.-% of the fiber reinforced composite according to the present invention.

In the following the fiber reinforced composite is defined in more detail and subsequently the components of said composite.

### The fiber reinforced composite

The present invention is directed to a fiber reinforced composite comprising a polypropylene (PP1), a heterophasic propylene copolymer (HECO), glass fibers (GF) and a compatibilizer (CA). The fiber reinforced composite is understood as known in the art. That is, the polypropylene (PP1) together with the heterophasic propylene copolymer (HECO) forms the dominant part of the continuous phase in which the glass fibers are embedded. In case the glass fibers are short glass fibers, said fibers are dispersed in the polymer mixture comprising the polypropylene (PP1) and the

heterophasic propylene copolymer (HECO), wherein the polymer mixture acts as the continuous phase. The compatibilizer (CA) improves the adhesion between the polar glass fibers and the non-polar polymer mixture comprising the polypropylene (PP1) and the heterophasic propylene copolymer (HECO).

Accordingly, the present invention is directed to a fiber reinforced composite comprising

(a) 30 to 60 wt.-%, preferably 35 to 55 wt.-%, based on the fiber reinforced composite, of a polypropylene (PP1),
(b) 10 to 40 wt.-%, preferably 20 to 35 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 10 to 40 wt.-%, preferably 15 to 30 wt.-%, based on the fiber reinforced composite, of glass fibers (GF), and
(d) 0.05 to 5.0 wt.-%, preferably 0.1 to 5.0 wt.-%, based on the fiber reinforced composite, of a compatibilizer (CA),

wherein the total amount of the polypropylene (PP1), the heterophasic propylene copolymer (HECO), the glass fibers (GF) and the compatibilizer (CA) in the fiber reinforced composite is at least 95 wt.-%, preferably at least 97 wt.-%.

Beside these four components, typical additives may be present which for instance are added to enhance the lifetime of the polypropylene (PP1) and the heterophasic propylene copolymer (HECO), i.e. antioxidants (see definition of additives below).

Accordingly, the present invention is directed to a fiber reinforced composite comprising

(a) 35 to 55 wt.-%, based on the fiber reinforced composite, of a polypropylene (PP1),
(b) 20 to 35 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 15 to 30 wt.-%, based on the fiber reinforced composite, of glass fibers (GF),
(d) 0.1 to 5.0 wt.-%, based on the fiber reinforced composite, of a compatibilizer (CA), and
(e) 0.1 to 5.0 wt.-%, based on the fiber reinforced composite, of additives (AD),

wherein the total amount of the polypropylene (PP1), the heterophasic propylene copolymer (HECO), the glass fibers (GF) the compatibilizer (CA), and the additives (AD), in the fiber reinforced composite is at least 98 wt.-%, preferably in the range of 98 to 100 wt.-%, like in the range of 99 to 100 wt.-%.

In a specific embodiment the fiber reinforced composite according to this invention preferably consists of

(a) 35 to 55 wt.-%, based on the fiber reinforced composite, of a polypropylene (PP1),
(b) 20 to 35 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 15 to 30 wt.-%, based on the fiber reinforced composite, of glass fibers (GF),
(d) 0.1 to 5.0 wt.-%, based on the fiber reinforced composite, of a compatibilizer (CA), and
(e) 0.1 to 5.0 wt.-%, based on the fiber reinforced composite, of additives (AD).

As mentioned above the continuous phase of the fiber reinforced composition is mainly dominated by the polypropylene (PP1) and the heterophasic propylene copolymer (HECO). Accordingly it is preferred that the continuous phase of the fiber reinforced composition in which the glass fibers are embedded comprises at least 97 wt.-%, more preferably at least 98 wt.-% of a mixture consisting of the polypropylene (PP1) and the heterophasic propylene copolymer (HECO).

Further, due to the presence of the heterophasic propylene copolymer (HECO) the fiber reinforced composition contains an elastomeric polymer, i.e. the ethylene-propylene rubber (EPR). An elastomeric polymer is understood as a polymer which does not form a continuous phase within a (semi)crystalline polypropylene. In other words, an elastomeric polymer is dispersed in the (semi)crystalline polypropylene, i.e. forms inclusion in the (semi)crystalline polypropylene. A polymer containing an elastomeric polymer as inclusions as a second polymer phase is called heterophasic. The presence of second polymer phases or the so-called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures. Hence, the polymer phase of the fiber reinforced composition according to this invention in itself forms a system in which the polypropylene (PP1) together with the propylene homopolymer (H-PP2) form a continuous phase in which the ethylene-propylene rubber (EPR) is dispersed.

Accordingly it is preferred that the weight ratio between the mixture of the polypropylene (PP1) and the propylene homopolymer (H-PP2) acting as the matrix and the ethylene-propylene rubber (EPR) dispersed in said matrix [((PP1)+(H-PP2)/(EPR)] is in the range of 75:25 to 95:5, more preferably in the range of 80:20 to 92:8.

Furthermore it is preferred that the weight ratio between the polypropylene (PP1) and the propylene homopolymer (H-PP2) [(PP1)/(H-PP2)] is in the range of 60:40 to 80:20, more preferably in the range of 68:32 to 77:23.

Additionally it is preferred that the molecular weight of the polypropylene (PP1) and the propylene homopolymer (H-PP2) of the heterophasic propylene copolymer (HECO) are rather similar. Accordingly it is preferred that the propylene homopolymer (H-PP2) of the heterophasic propylene copolymer (HECO) has a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Further it is preferred that the fiber reinforced composite has a melt flow rate $MFR_2$ (230 °C, 2.16 kg) measured according to ISO 1133 in the range of 8.0 to 50 g/10min, more preferably in the range of 10 to 30 g/10min.

The fiber reinforced composite according to this invention is especially featured by low emissions. Accordingly, it is preferred that the fiber reinforced composite has a VOC (volatile organic compounds) value determined according to VDA 278 October 2011 of below 150 μg/g, more preferably in the range of 50 to below 150 μg/g, still more preferably in the range of 60 to 100 μg/g.

It is further preferred that the fiber reinforced composite has a tensile modulus as determined on injection moulded specimens according to ISO 527-1 at 1 mm/min in the range of 3500 to 7000 MPa, more preferably in the range of 3800 to 6500 MPa, like in the range of 4000 to 63000 MPa. Also, the fiber reinforced composite preferably has an elongation at break in the same tensile test of more than 2.0 %, more preferably in the range of 2.1 to 10.0 %, like in the range of 2.2 to 8.0 %.

Additionally or alternatively to the requirement of the previous paragraph the fiber reinforced composite has an impact Charpy impact strength determined according to ISO 179-1eU at 23 °C in the range of 30.0 to 75.0 kJ/$m^2$, more preferably in the range of 35.0 to 70.0 kJ/$m^2$, like in the range of 40.0 to 65.0 kJ/$m^2$.

In a very specific embodiment the fiber reinforced composite has a heat deflection temperature HDT measured in accordance with ISO 75 B at a load of 0.46 MPa in the range from 146 to 160°C, more preferably in the range of 148 to 158 °C, like in the range of 150 to 156°C.

**The polypropylene (PP1)**

One essential component of the present invention is the polypropylene (PP1), which needs to be carefully selected to reach the desired properties. Accordingly, the polypropylene (PP1) according to this invention must have been produced with a metallocene catalyst and must have a rather broad molecular weight distribution (MWD) for such produced polypropylenes.

Accordingly, the polypropylene (PP1) has been produced in the presence of a specific metallocene catalyst as defined in more detail below. In contrast to polypropylenes produced in the presence of Ziegler-Natta catalysts, polypropylenes produced in the presence of metallocene catalysts are characterized by mis-insertions of monomer units during the polymerization process. Therefore, the polypropylene (PP1) according to this invention has a certain amount of 2,1-regio defects, which indicates that it has been produced with a metallocene catalyst. That is the polypropylene (PP1) according to this invention has 2,1 regio-defects in the range of 0.20 to 1.00 %, more preferably in the range of 0.40 to 0.90 %, determined by $^{13}$C-NMR spectroscopy.

Accordingly, the polypropylene (PP1) according to this invention has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a comonomer content determined by $^{13}$C-NMR spectroscopy of not more than 0.5 wt.-%, the comonomer being ethylene,
(iii) a molecular weight distribution (MWD) determined by gel permeation chromatography (GPC) in the range of more than 4.5 to below 8.5, preferably in the range of 5.5 to 8.0, and
(iv) 2,1 regio-defects determined by $^{13}$C-NMR spectroscopy in the range of 0.20 to 1.00 %, more preferably in the range of 0.40 to 0.90 %.

More preferably, the polypropylene (PP1) according to this invention has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a comonomer content determined by $^{13}$C-NMR spectroscopy of not more than 0.5 wt.-%, the comonomer being ethylene,

(iii) a molecular weight distribution (MWD) determined by gel permeation chromatography (GPC) in the range of more than 4.5 to below 8.5, preferably in the range of 5.5 to 8.0,
(iv) 2,1 regio-defects determined by $^{13}$C-NMR spectroscopy in the range of 0.20 to 1.00 %, more preferably in the range of 0.40 to 0.90 %, and
(v) a melting temperature Tm determined by DSC according to ISO 11357-3 (heating and cooling rate 10°C/min) in the range of 150 to 159 °C.

It is especially preferred that the polypropylene (PP1) is a propylene homopolymer (H-PP1).
Therefore it is preferred that the polypropylene (PP1) of this invention is a propylene homopolymer (H-PP1) having

(i) a melt flow rate $MFR_2$ (230 °C, 2.16 kg) measured according to ISO 1133 in the range of 40.0 to 250 g/10min, preferably in the range of 50.0 to 150 g/10min,
(ii) a molecular weight distribution (MWD) determined by gel permeation chromatography (GPC) in the range of more than 4.5 to below 8.5, preferably in the range of 5.5 to 8.0, and
(iii) 2,1 regio-defects determined by $^{13}$C-NMR spectroscopy in the range of 0.20 to 1.00 %, more preferably in the range of 0.40 to 0.90 %.

Further the polypropylene (PP1), preferably the propylene homopolymer (H-PP1), has a rather high amount of polymer which elutes below 100 °C by Temperature Rising Elution fractionation (TREF). Accordingly, it is preferred that the the polypropylene (PP1) has a fraction which elutes below 100 °C by Temperature Rising Elution fractionation (TREF) in the range of 12 to 20 wt.-%, more preferably in the range of 14 to 18 wt.-%.
Accordingly, it is preferred that the polypropylene (PP1) has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a comonomer content determined by $^{13}$C-NMR spectroscopy of not more than 0.5 wt.-%, the comonomer being ethylene,
(iii) a molecular weight distribution (MWD) determined by gel permeation chromatography (GPC) in the range of more than 4.5 to below 8.5, preferably in the range of 5.5 to 8.0,
(iv) 2,1 regio-defects determined by $^{13}$C-NMR spectroscopy in the range of 0.20 to 1.00 %, more preferably in the range of 0.40 to 0.90 %, and
(v) a fraction which elutes below 100 °C by Temperature Rising Elution fractionation (TREF) in the range of 12 to 20 wt.-%, more preferably in the range of 14 to 18 wt.-%.

Still yet more preferably the polypropylene (PP1) is a propylene homopolymer (H-PP1) having

(i) a melt flow rate $MFR_2$ (230 °C, 2.16 kg) measured according to ISO 1133 in the range of 40.0 to 250 g/10min, preferably in the range of 50.0 to 150 g/10min,
(ii) a molecular weight distribution (MWD) determined by gel permeation chromatography (GPC) in the range of more than 4.5 to below 8.5, preferably in the range of 5.5 to 8.0,
(iii) 2,1 regio-defects determined by $^{13}$C-NMR spectroscopy in the range of 0.20 to 1.00 %, more preferably in the range of 0.40 to 0.90 %, and
(iv) a fraction which elutes below 100 °C by Temperature Rising Elution fractionation (TREF) in the range of 12 to 20 wt.-%, more preferably in the range of 14 to 18 wt.-%.

In addition the polypropylene (PP1) can be further defined by its melting temperature and the xylene soluble content.
Accordingly it is preferred that the polypropylene (PP1), especially the propylene homopolymer (H-PP1) has a melting temperature Tm determined by DSC according to ISO 11357-3 (heating and cooling rate 10°C/min) in the range of 150 to 159 °C.
The polypropylene (PP1) according to this invention is further preferably characterized by a very low xylene cold soluble (XCS) content, which cannot be reached by Ziegler-Natta catalysts. Thus in a preferred embodiment the polypropylene (PP1), more preferably the propylene homopolymer (H-PP1), according to this invention has a xylene cold soluble (XCS) fraction measured according to ISO 16152 (25 °C) in the range of 0.5 to 3.0 wt.-%, more preferably in the range of 0.8 to 2.5 wt.-%.
As mentioned above it is preferred that the polypropylene (PP1) of this invention is produced by a specific metallocene catalyst. Accordingly, in a preferred embodiment the polypropylene (PP1), more preferably the propylene

homopolymer (H-PP1), is produced by polymerizing propylene and optionally ethylene in the presence of the metallocene catalyst having the formula (I)

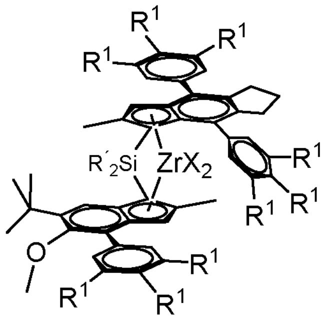

(I)

wherein each $R^1$ are independently the same or can be different and are hydrogen or a linear or branched $C_1$-$C_6$ alkyl group, whereby at least on R' per phenyl group is not hydrogen,
R' is a $C_1$-$C_{10}$ hydrocarbyl group, preferably a $C_1$-$C_4$ hydrocarbyl group and more preferably a methyl group and X independently is a hydrogen atom, a halogen atom, $C_1$-$C_6$ alkoxy group, $C_1$-$C_6$ alkyl group, phenyl or benzyl group.

In the following the term "formula (I)" stands for the metallocene catalyst as defined in the previous paragraph.
Hence it is especially preferred that the polypropylene (PP1) has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a comonomer content determined by $^{13}$C-NMR spectroscopy of not more than 0.5 wt.-%, the comonomer being ethylene,
(iii) a molecular weight distribution (MWD) determined by gel permeation chromatography (GPC) in the range of more than 4.5 to below 8.5, preferably in the range of 5.5 to 8.0,
(iv) 2,1 regio-defects determined by $^{13}$C-NMR spectroscopy in the range of 0.20 to 1.00 %, more preferably in the range of 0.40 to 0.90 %, and
(v) optionally a fraction which elutes below 100 °C by Temperature Rising Elution fractionation (TREF) in the range of 12 to 20 wt.-%, more preferably in the range of 14 to 18 wt.-%,

wherein the polypropylene (PP1) is produced by polymerizing propylene and optionally ethylene in the presence of the metallocene catalyst having the formula (I) as defined above.
Still more preferably the polypropylene (PP1) is a propylene homopolymer (H-PP1) having

(i) a melt flow rate $MFR_2$ (230 °C, 2.16 kg) measured according to ISO 1133 in the range of 40.0 to 250 g/10min, preferably in the range of 50.0 to 150 g/10min,
(ii) a molecular weight distribution (MWD) determined by gel permeation chromatography (GPC) in the range of more than 4.5 to below 8.5, preferably in the range of 5.5 to 8.0,
(iii) 2,1 regio-defects determined by $^{13}$C-NMR spectroscopy in the range of 0.20 to 1.00 %, more preferably in the range of 0.40 to 0.90 %, and
(iv) optionally a fraction which elutes below 100 °C by Temperature Rising Elution fractionation (TREF) in the range of 12 to 20 wt.-%, more preferably in the range of 14 to 18 wt.-%,

wherein said propylene homopolymer (H-PP1) is produced by polymerizing propylene in the presence of the metallocene catalyst having the formula (I) as defined above.
Additionally it is preferred that the polypropylene (PP1), like the propylene homopolymer (H-PP1) has not been visbroken. Visbreaking, or controlled degradation by a radical-induced process initiated by peroxides or other radical generators, is normally used to enhance the melt flow rate and thus to lower the molecular weight and to narrow the molecular weight distribution. However degradation, i.e. vis-breaking, of a polymer is obtained by the use of peroxides. Visbreaking as well as the use of peroxides may enhance the emission values (in terms of VOC or FOG) due to undesired side reaction leading to an increased amount of oligomers. Further, the presence of peroxides may lead to an undesired discoloration of the polypropylene. In other words, whether a polypropylene has been visbroken can be identified by the decomposition products of the peroxides or other radical generators, and by discoloration of the polypropylene. In the following whenever the term "non-visbreaking" or "non-visbroken" is used it is therefore understood that the melt flow rate,

the molecular weight and the molecular weight distribution of the polypropylene (PP1) has not been altered by chemical or physical treatment and further that the polypropylene (PP1) is free of decomposition products of peroxides or other radical generators. Further vis-breaking is anyway against the teaching of the present invention as it is desired that the polypropylene (PP1) of this invention has a rather broad molecular weight distribution, which is in contradiction of vis-breaking.

Accordingly it is preferred that the polypropylene (PP1) has not been visbroken and has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a comonomer content determined by $^{13}C$-NMR spectroscopy of not more than 0.5 wt.-%, the comonomer being ethylene,
(iii) a molecular weight distribution (MWD) determined by gel permeation chromatography (GPC) in the range of more than 4.5 to below 8.5, preferably in the range of 5.5 to 8.0,
(iv) 2,1 regio-defects determined by $^{13}C$-NMR spectroscopy in the range of 0.20 to 1.00 %, more preferably in the range of 0.40 to 0.90 %, and
(v) optionally a fraction which elutes below 100 °C by Temperature Rising Elution fractionation (TREF) in the range of 12 to 20 wt.-%, more preferably in the range of 14 to 18 wt.-%,

wherein the polypropylene (PP1) is produced by polymerizing propylene and optionally ethylene in the presence of the metallocene catalyst having the formula (I) as defined above.

More preferably the polypropylene (PP1) is a propylene homopolymer (H-PP1), wherein said propylene homopolymer (H-PP1) has not been visbroken and has

(i) a melt flow rate $MFR_2$ (230 °C, 2.16 kg) measured according to ISO 1133 in the range of 40.0 to 250 g/10min, preferably in the range of 50.0 to 150 g/10min,
(ii) a molecular weight distribution (MWD) determined by gel permeation chromatography (GPC) in the range of more than 4.5 to below 8.5, preferably in the range of 5.5 to 8.0,
(iii) 2,1 regio-defects determined by $^{13}C$-NMR spectroscopy in the range of 0.20 to 1.00 %, more preferably in the range of 0.40 to 0.90 %, and
(iv) optionally a fraction which elutes below 100 °C by Temperature Rising Elution fractionation (TREF) in the range of 12 to 20 wt.-%, more preferably in the range of 14 to 18 wt.-%,

wherein the propylene homopolymer (H-PP1) is produced by polymerizing propylene in the presence of the metallocene catalyst having the formula (I) as defined above.

In the following the polymerization of the polypropylene is described in detail.

The polypropylene (PP1) according to this invention can be produced in one reactor or in a reactor cascade of two or more reactors, preferably two reactors. As the polypropylene (PP1) according to this invention must have a broad molecular weight distribution (MWD), i.e. of at least 4.5, it is preferred that the polypropylene (PP1) is produced in at least two reactors, in each reactor a polypropylene fraction is produced which differ considerable in the molecular weight thereby arriving at a final polypropylene (PP1) having a broader molecular weight distribution (MWD) as if the polypropylene (PP1) had only been produced in one reactor. The polymerization processes suitable for producing the polypropylene (PP1) according to this invention are known in the art. They comprise at least one polymerization stage, where polymerization is typically carried out in solution, slurry, bulk or gas phase. Typically, the polymerization process comprises additional polymerization stages or reactors. In one particular embodiment, the process contains at least one bulk reactor zone and optionally at least one gas phase reactor zone, each zone comprising at least one reactor and all reactors being arranged in cascade. In one particularly preferred embodiment, the polymerization process comprises at least one bulk reactor and at least one gas phase reactor arranged in that order. The process may further comprise pre- and post-reactors. Pre-reactors comprise typically pre-polymerization reactors. In this kind of processes, the use of higher polymerization temperatures is preferred in order to achieve specific properties of the polymer. Typical temperatures in these processes are 70 °C or higher, preferably 75 °C or higher. The higher polymerization temperatures as mentioned above can be applied in some or all reactors of the reactor cascade.

Multimodal polymers can be produced according to several processes which are described, e.g. in WO 92/12182, EP 0 887 379, and WO 98/58976.

Preferably, the process for producing the polypropylene (PP1) comprises two polymerization stages, in which in the $1^{st}$ polymerization stage a the slurry reactor (SR), like a loop reactor (LR), while in the $2^{nd}$ polymerization stage a gas phase reactor is used.

The conditions in the $1^{st}$ polymerization stage may be as follows:

- the temperature is within the range of 70 °C to 110 °C, preferably between 72 °C and 100 °C, more preferably in the range of 75 to 90 °C,
- the pressure is within the range of 20 bar to 80 bar, preferably between 40 bar and 70 bar,
- hydrogen is added for controlling the molar mass in a manner known per se,
- ethylene is fed in case the polypropylene (PP1) shall contain low amounts thereof.

Subsequently, the reaction mixture from 1st polymerization stage is transferred to the gas phase reactor (GPR), whereby the conditions are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen is added for controlling the molar mass in a manner known per se;
- ethylene is fed in case the polypropylene (PP1) shall contain low amounts thereof.

The residence time can vary in both reactor zones.
In one embodiment of the process for producing the polypropylene (PP1) the residence time in the slurry reactor (SR), e.g. loop (LR), is in the range 0.2 to 2.5 hours, e.g. 0.3 to 1.5 hours and the residence time in the gas phase reactor (GPR) will generally be 0.8 to 6.0 hours, like 1.0 to 4.0 hours.
A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315. A further suitable slurry-gas phase process is the Spheripol® process of Basell.
As mentioned above the polypropylene (PP1) according to this invention is especially obtained in a polymerization process using a metallocene catalyst having the formula (I)

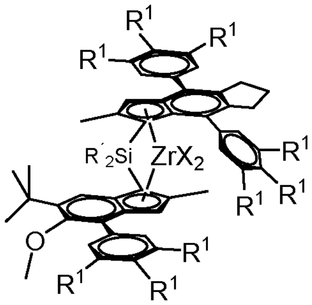

(I)

wherein each R' are independently the same or can be different and are hydrogen or a linear or branched $C_1$-$C_6$ alkyl group, whereby at least on R' per phenyl group is not hydrogen,

R' is a $C_1$-$C_{10}$ hydrocarbyl group, preferably a $C_1$-$C_4$ hydrocarbyl group and more preferably a methyl group and X independently is a hydrogen atom, a halogen atom, $C_1$-$C_6$ alkoxy group, $C_1$-$C_6$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.
Specific preferred metallocene catalysts of the invention include:

rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride rac-anti-dimethylsilanediyl [2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride rac-anti-dimethylsilanediyl[2-methyl-4,8-bis-(3',5'-dimethylphenyl)-1,5,6,7-tetrahydro-s-indacen-1-yl] [2-methyl-4-(3',5'-ditert-butyl-phenyl)-5-methoxy-6-tert-butylinden-1-yl] zirconium dichloride
or their corresponding zirconium dimethyl analogues.

The most preferred catalyst is rac-anti-dimethylsilanediyl[2-methyl-4,8-bis-(3',5'-dimethylphenyl)-1,5,6,7-tetrahydros-indacen-1-yl] [2-methyl-4-(3',5'-dimethylphenyl)-5-methoxy-6-tert-butylinden-1-yl] zirconium dichloride

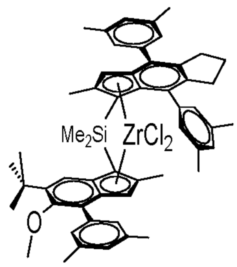

(II).

The ligands required to form the complexes and hence catalysts of the invention can be synthesized by any process and the skilled organic chemist would be able to devise various synthetic protocols for the manufacture of the necessary ligand materials. For Example WO2007/116034 discloses the necessary chemistry. Synthetic protocols can also generally be found in WO 2002/02576, WO 2011/135004, WO 2012/084961, WO 2012/001052, WO 2011/076780, WO 2015/158790 and WO 2018/122134. Especially reference is made to WO 2019/179959 in which the most preferred catalyst of the present invention is described. The examples section also provides the skilled person with sufficient direction.

Cocatalyst

To form an active catalytic species it is normally necessary to employ a cocatalyst as is well known in the art.

According to the present invention a cocatalyst system comprising a boron containing cocatalyst and/or an aluminoxane cocatalyst is used in combination with the above defined metallocene catalyst complex.

The aluminoxane cocatalyst can be one of formula (III):

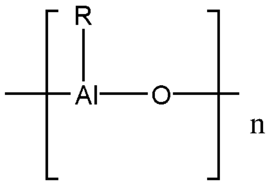

(III)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$C_{10}$ cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (III).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

It will be appreciated by the skilled man that where boron based cocatalysts are employed, it is normal to pre-alkylate the complex by reaction thereof with an aluminium alkyl compound, such as TIBA. This procedure is well known and any suitable aluminium alkyl, e.g. $Al(C_1$-$C_6$ $alkyl)_3$. can be used. Preferred aluminium alkyl compounds are triethylaluminium, triisobutylaluminium, tri-isohexylaluminium, tri-n-octylaluminium and tri-isooctylaluminium.

Alternatively, when a borate cocatalyst is used, the metallocene catalyst complex is in its alkylated version, that is for example a dimethyl or dibenzyl metallocene catalyst complex can be used.

Boron based cocatalysts of interest include those of formula (IV)

$BY_3$ (IV)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl) borane.

Particular preference is given to tris(pentafluorophenyl)borane.

However it is preferred that borates are used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include:

triethylammoniumtetra(phenyl)borate,
tributylammoniumtetra(phenyl)borate,
trimethylammoniumtetra(tolyl)borate,
tributylammoniumtetra(tolyl)borate,
tributylammoniumtetra(pentafluorophenyl)borate,
tripropylammoniumtetra(dimethylphenyl)borate,
tributylammoniumtetra(trifluoromethylphenyl)borate,
tributylammoniumtetra(4-fluorophenyl)borate,
N,N-dimethylcyclohexylammoniumtetrakis(pentafluorophenyl)borate,
N,N-dimethylbenzylammoniumtetrakis(pentafluorophenyl)borate,
N,N-dimethylaniliniumtetra(phenyl)borate,
N,N-diethylaniliniumtetra(phenyl)borate,
N,N-dimethylaniliniumtetrakis(pentafluorophenyl)borate,
N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate,
triethylphosphoniumtetra kis(phenyl) borate,
diphenylphosphoniumtetrakis(phenyl)borate,
tri(methylphenyl)phosphoniumtetrakis(phenyl)borate,
tri(dimethylphenyl)phosphoniumtetrakis(phenyl)borate,
triphenylcarbeniumtetrakis(pentafluorophenyl)borate,
or ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate or
N,N- dimethylbenzylammoniumtetrakis(pentafluorophenyl)borate.

It has been surprisingly found that certain boron cocatalysts are especially preferred. Preferred borates of use in the invention therefore comprise the trityl ion. Thus the use of N,N-dimethylammonium-tetrakispentafluorophenylborate and Ph3CB(PhF5)4 and analogues therefore are especially favoured.

According to the present invention, the preferred cocatalysts are alumoxanes, more preferably methylalumoxanes, combinations of alumoxanes with Al-alkyls, boron or borate cocatalysts, and combination of alumoxanes with boron-based cocatalysts.

Suitable amounts of cocatalyst will be well known to the skilled man.

The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support a metallocene catalyst.

Especially preferably, the support is a porous material so that the complex may be loaded into the pores of the support, e.g. using a process analogous to those described in WO94/14856 (Mobil), WO95/12622 (Borealis) and

WO2006/097497.

The average particle size of the silica support can be typically from 10 to 100 μm. However, it has turned out that special advantages can be obtained if the support has an average particle size from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

**The heterophasic polypropylene composition (HECO)**

The second mandatory component of the fiber reinforced composition according to this invention is the heterophasic propylene copolymer (HECO).

The heterophasic propylene copolymer (HECO) according to this invention comprises a matrix being a propylene homopolymer (HPP-2) and dispersed therein an ethylene-propylene rubber (EPR). Thus the matrix contains (finely) dispersed inclusions being not part of the matrix and said inclusions contain the ethylene-propylene rubber (EPR). As mentioned above when defining the continuous phase of the fiber reinforced composite, the term "inclusion" indicates that the matrix and the inclusion form different phases within the heterophasic propylene copolymer (HECO). The presence of second phases or the so called inclusions are for instance visible by high resolution microscopy, like electron microscopy or atomic force microscopy, or by dynamic mechanical thermal analysis (DMTA). Specifically, in DMTA the presence of a multiphase structure can be identified by the presence of at least two distinct glass transition temperatures.

Accordingly, the heterophasic propylene copolymer (HECO) according to this invention comprises

(a) a propylene homopolymer (H-PP2) and
(b) an ethylene-propylene rubber (EPR).

As will be explained in more detail below the heterophasic propylene copolymer (HECO) according to this invention has been produced in the presence of a Ziegler-Natta catalyst of the 4$^{th}$ generation (cf. Nello Pasquini, Polypropylene Handbook, 2nd Edition, pages 17 and 18). Accordingly in contrast to the polypropylene (PP1) which shows a considerable amount of 2,1 regio-defects in the polymer chain, the heterophasic propylene copolymer (HECO) shows none of the 2,1 regio-defects or almost none of 2,1 regio-defects.

Accordingly the heterophasic propylene copolymer (HECO) according to this invention comprises

(a) a propylene homopolymer (H-PP2) having 2,1 regio-defects determined by $^{13}$C-NMR spectroscopy in the range of 0 to below 0.10 %, and
(b) an ethylene-propylene rubber (EPR).

It is especially preferred that the the heterophasic propylene copolymer (HECO) according to this invention comprises

(a) a propylene homopolymer (H-PP2) for which no 2,1 regio-defects are detectable by $^{13}$C-NMR spectroscopy, and
(b) an ethylene-propylene rubber (EPR).

Additionally it is preferred that, like the polypropylene (PP1), also the propylene homopolymer (H-PP2) of the heterophasic propylene copolymer (HECO) has a broad molecular weight distribution (MWD), i.e. in the range of 5.0 to below 10.0, more preferably in the range of 6.0 to 9.0.

Accordingly in a preferred embodiment the heterophasic propylene copolymer (HECO) according to this invention comprises

(a) a propylene homopolymer (H-PP2), and
(b) an ethylene-propylene rubber (EPR),

wherein the propylene homopolymer (H-PP2) has

(i) 2,1 regio-defects determined by $^{13}$C-NMR spectroscopy in the range of 0 to below 0.10 %, preferably no 2,1 regio-defects are detectable by $^{13}$C-NMR spectroscopy, and
(ii) a molecular weight distribution (MWD) in the range of 5.0 to below 10.0, preferably in the range of 6.0 to 9.0.

To achieve further improved properties for the fiber reinforced composite according to this invention the molecular weight of the polypropylene (PP1) and of the propylene homopolymer (H-PP2) of the heterophasic propylene copolymer (HECO) must be rather similar. Thus it is preferred that the propylene homopolymer (H-PP2) of the heterophasic propylene copolymer (HECO) has a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Thus in a specific preferred embodiment the heterophasic propylene copolymer (HECO) according to this invention comprises

(a) a propylene homopolymer (H-PP2), and
(b) an ethylene-propylene rubber (EPR),

wherein the propylene homopolymer (H-PP2) has

(i) 2,1 regio-defects determined by $^{13}$C-NMR spectroscopy in the range of 0 to below 0.10 %, preferably no 2,1 regio-defects are detectable by $^{13}$C-NMR spectroscopy,
(ii) a molecular weight distribution (MWD) in the range of 5.0 to below 10.0, preferably in the range of 6.0 to 9.0, and
(iii) a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

The propylene homopolymer (H-PP2) of the heterophasic propylene copolymer (HECO) can be further characterized by its high melting temperature which is typical for a propylene homopolymer obtained by 4$^{th}$ generation Ziegler-Natta catalyst, i.e. by a melting temperature of at least 160 °C, more preferably of at least 163 °C, like in the range of 163 to 167 °C.

Therefore it is preferred that the heterophasic propylene copolymer (HECO) according to this invention comprises

(a) a propylene homopolymer (H-PP2), and
(b) an ethylene-propylene rubber (EPR),

wherein the propylene homopolymer (H-PP2) has

(i) a melting temperature determined according to differential scanning calorimetry (DSC) of at least 160 °C, more preferably of at least 163 °C, like in the range of 163 to 167 °C,
(ii) 2,1 regio-defects determined by $^{13}$C-NMR spectroscopy in the range of 0 to below 0.10 %, preferably no 2,1 regio-defects are detectable by $^{13}$C-NMR spectroscopy,
(iii) a molecular weight distribution (MWD) in the range of 5.0 to below 10.0, preferably in the range of 6.0 to 9.0, and
(iv) optionally a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Additionally the heterophasic propylene copolymer (HECO) can be further defined by its elastomeric part, i.e. by the ethylene-propylene rubber (EPR). As known by the skilled person for heterophasic systems in which the matrix is a propylene homopolymer and the elastomeric part an ethylene-propylene rubber (EPR), the xylene soluble fraction (XCS) reflects the rubber, while the propylene homopolymer (H-PP2) is reflected by the xylene insoluble fraction.

Thus, it is preferred that the heterophasic propylene copolymer (HECO) according to this invention has a xylene cold soluble (XCS) content determined at 25 °C according ISO 16152 in the range of 22 to 45 wt.-%, more preferably in the range of 25 to 40 wt.-%.

Further it is preferred that the ethylene content of the xylene cold soluble fraction is considerably high. Thus, in a preferred embodiment the heterophasic propylene copolymer (HECO) has an ethylene content determined by $^{13}$C-NMR of the xylene cold soluble (XCS) fraction in the range of 40 to 60 mol-%, more preferably in the range of 48 to 58 mol-%.

In addition, the molecular weight of the ethylene propylene rubber (EPR) of the heterophasic propylene copolymer should be preferably not too low. Thus, it is preferred that the xylene cold soluble (XCS) fraction of the heterophasic propylene copolymer (HECO) has an intrinsic viscosity (IV) measured according to ISO 1628/1 (at 135 °C in

decalin) in the range of 2.0 to 5.0 dl/g, preferably in the range of 2.0 to 3.5 dl/g.

Finally, it is preferred that the heterophasic propylene copolymer (HECO) has an ethylene content determined by $^{13}$C-NMR in the range of 15 to 33 mol-%, more preferably in the range of 20 to 30 mol-% and/or a melt flow rate $MFR_2$ (230 °C, 2.16 kg) measured according to ISO 1133 in the range of 10 to 50 g/10min, more preferably in the range of 15 to 40 g/10min.

Accordingly it is in particular preferred that the heterophasic propylene copolymer (HECO) according to this invention comprises

(a) a propylene homopolymer (H-PP2), and
(b) an ethylene-propylene rubber (EPR),

wherein the heterophasic propylene copolymer (HECO) has a xylene cold soluble (XCS) content determined at 25 °C according ISO 16152 in the range of 22 to 45 wt.-%, more preferably in the range of 25 to 40 wt.-%,
wherein still further the propylene homopolymer (H-PP2) of the heterophasic propylene copolymer (HECO) has

(i) 2,1 regio-defects determined by $^{13}$C-NMR spectroscopy in the range of 0 to below 0.10 %, preferably no 2,1 regio-defects are detectable by $^{13}$C-NMR spectroscopy,
(ii) a molecular weight distribution (MWD) in the range of 5.0 to below 10.0, preferably in the range of 6.0 to 9.0, and
(iii) optionally a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Still more preferably the heterophasic propylene copolymer (HECO) according to this invention comprises

(a) a propylene homopolymer (H-PP2), and
(b) an ethylene-propylene rubber (EPR),

wherein the heterophasic propylene copolymer (HECO) has a xylene cold soluble (XCS) content determined at 25 °C according ISO 16152 in the range of 22 to 45 wt.-%, preferably in the range of 25 to 40 wt.-%,
wherein further the xylene cold soluble (XCS) fraction of the heterophasic propylene copolymer (HECO) has

(i) an ethylene content determined by $^{13}$C-NMR in the range of 40 to 60 mol-%, more preferably in the range of 48 to 58 mol-%,

wherein still further the propylene homopolymer (H-PP2) of the heterophasic propylene copolymer (HECO) has

(i) 2,1 regio-defects determined by $^{13}$C-NMR spectroscopy in the range of 0 to below 0.10 %, preferably no 2,1 regio-defects are detectable by $^{13}$C-NMR spectroscopy,
(ii) a molecular weight distribution (MWD) in the range of 5.0 to below 10.0, preferably in the range of 6.0 to 9.0, and
(iii) optionally a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Still yet more preferably the heterophasic propylene copolymer (HECO) according to this invention comprises

(a) a propylene homopolymer (H-PP2), and
(b) an ethylene-propylene rubber (EPR),

wherein the heterophasic propylene copolymer (HECO) has a xylene cold soluble (XCS) content determined at 25 °C according ISO 16152 in the range of 22 to 45 wt.-%, preferably in the range of 25 to 40 wt.-%,
wherein further the xylene cold soluble (XCS) fraction of the heterophasic propylene copolymer (HECO) has

(i) an ethylene content determined by $^{13}$C-NMR in the range of 40 to 60 mol-%, more preferably in the range of 48 to 58 mol-%, and

(ii) an intrinsic viscosity (IV) measured according to ISO 1628/1 (at 135 °C in decalin) in the range of 2.0 to 5.0 dl/g, preferably in the range of 2.0 to 3.5 dl/g,

wherein still further the propylene homopolymer (H-PP2) of the heterophasic propylene copolymer (HECO) has

(i) a melting temperature determined according to differential scanning calorimetry (DSC) of at least 160 °C, more preferably of at least 163 °C,
(ii) 2,1 regio-defects determined by $^{13}C$-NMR spectroscopy in the range of 0 to below 0.10 %, preferably no 2,1 regio-defects are detectable by $^{13}C$-NMR spectroscopy,
(iii) a molecular weight distribution (MWD) in the range of 5.0 to below 10.0, preferably in the range of 6.0 to 9.0, and
(iv) optionally a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

Even yet more preferably the heterophasic propylene copolymer (HECO) according to this invention comprises

(a) a propylene homopolymer (H-PP2), and
(b) an ethylene-propylene rubber (EPR),

wherein the heterophasic propylene copolymer (HECO) has

(i) an ethylene content determined by $^{13}C$-NMR in the range of 15 to 33 mol-%, more preferably in the range of 20 to 30 mol-%,
(ii) a melt flow rate $MFR_2$ (230 °C, 2.16 kg) measured according to ISO 1133 in the range of 10 to 50 g/10min, more preferably in the range of 15 to 40 g/10min,

wherein further the heterophasic propylene copolymer (HECO) has a xylene cold soluble (XCS) content determined at 25 °C according ISO 16152 in the range of 22 to 45 wt.-%, preferably in the range of 25 to 40 wt.-%,
wherein still further the xylene cold soluble (XCS) fraction of the heterophasic propylene copolymer (HECO) has

(i) an ethylene content determined by $^{13}C$-NMR in the range of 40 to 60 mol-%, more preferably in the range of 48 to 58 mol-%, and
(ii) an intrinsic viscosity (IV) measured according to ISO 1628/1 (at 135 °C in decalin) in the range of 2.0 to 5.0 dl/g, preferably in the range of 2.0 to 3.5 dl/g,

wherein still yet further the propylene homopolymer (H-PP2) of the heterophasic propylene copolymer (HECO) has

(i) a melting temperature determined according to differential scanning calorimetry (DSC) of at least 160 °C, more preferably of at least 163 °C,
(ii) 2,1 regio-defects determined by $^{13}C$-NMR spectroscopy in the range of 0 to below 0.10 %, preferably no 2,1 regio-defects are detectable by $^{13}C$-NMR spectroscopy,
(iii) a molecular weight distribution (MWD) in the range of 5.0 to below 10.0, preferably in the range of 6.0 to 9.0, and
(iv) optionally a melt flow rate $MFR_2$ (230 °C, 2.16 kg) measured according to ISO 1133 in the range of 40.0 to 250 g/10min, more preferably in the range of 50.0 to 150 g/10min, with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.75 to 1.25, more preferably in the range of 0.80 to 1.20.

As mentioned above, the heterophasic propylene copolymer (HECO) according to this invention has been produced with a 4$^{th}$ generation Ziegler-Natta catalyst. Such catalysts are state of the art and well known to the skilled person. For instance as Ziegler-Natta catalyst the BHC01P catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.WO 92/19658 and WO 92/19653 can be used.

Also the polymerization conditions for the production of the heterophasic propylene copolymer (HECO) are known to the skilled person. The heterophasic propylene copolymer (HECO) is produced in two polymerization zones, in the first zone the propylene homopolymer (H-PP2) is produced while in the second polymerization zone the ethylene-propylene rubber (EPR) is obtained. Each zone may contain one or more reactors. For instance the first zone may contain just a loop reactor whereas the second zone may just contain one gas phase reactor. However it is preferred that the first zone contains a loop reactor and a gas phase reactor, while second zone contains two gas phase reactors.

Thus, the process for the preparation of the heterophasic propylene copolymer (HECO) according to the present invention is preferably a sequential polymerization process comprising at least two reactors, preferably four reactors, connected in series, wherein said process comprises the steps of

(A) polymerizing in a first reactor (R-1) being a slurry reactor (SR), preferably a loop reactor (LR), propylene, obtaining a first fraction of the propylene homopolymer (H-PP2) as defined in the instant invention,
(B) transferring said first fraction of the propylene homopolymer (H-PP2) of the first reactor (R-1) in a second reactor (R-2) being a gas phase reactor (GPR-1),
(C) feeding to said second reactor (R-2) propylene,
(D) polymerizing in said second reactor (R-2) and in the presence of the first fraction of the propylene homopolymer (H-PP2) propylene, obtaining a second fraction of the propylene homopolymer (H-PP2), said first and second fraction form the propylene homopolymer (H-PP2) of the heterophasic propylene copolymer (HECO),
(E) transferring said propylene homopolymer (H-PP2) of the second reactor (R-2) in a third reactor (R-3) being a gas phase reactor (GPR-2),
(F) feeding to said third reactor (R-3) propylene and ethylene,
(G) polymerizing in said third reactor (R-3) and in the presence of said propylene homopolymer (H-PP2) propylene and ethylene obtaining a first fraction of the ethylene-propylene rubber (EPR),
(H) transferring the mixture of the propylene homopolymer (H-PP2) and of the first fraction of the ethylene-propylene rubber (EPR) of the third reactor (R-3) in a fourth reactor (R-4) being a gas phase reactor (GPR-3),
(I) feeding to said fourth reactor (R-4) propylene and ethylene,
(J) polymerizing in said fourth reactor (R-4) and in the presence of the mixture of the third reactor (R-3) propylene and ethylene obtaining a second fraction of the ethylene-propylene rubber (EPR),

said first fraction and second fraction of the ethylene-propylene rubber (EPR) form the ethylene-propylene rubber (EPR), and
said propylene homopolymer (H-PP2) and said ethylene-propylene rubber (EPR) form the heterophasic propylene copolymer (HECO), wherein further in the first reactor (R-1), second reactor (R-2), third reactor (R-3) and fourth reactor (R-4) the polymerization takes place in the presence of a 4$^{th}$ generation Ziegler-Natta catalyst.

A preferred multistage process is a "loop-gas phase"-process, such as developed by Borealis A/S, Denmark (known as BORSTAR® technology) described e.g. in patent literature, such as in EP 0 887 379 or in WO 92/12182.

Heterophasic polymers can be produced according to several processes which are described, e.g. in WO 92/12182, EP 0 887 379, and WO 98/58976.

Preferably, in the instant process for producing the heterophasic propylene copolymer (HECO) as defined above the conditions for the first reactor (R-1), i.e. the slurry reactor (SR), like a loop reactor (LR), of step (A) may be as follows:

- the temperature is within the range of 40 °C to 110 °C, preferably between 60 °C and 100 °C, more preferably in the range of 65 to 90 °C,
- the pressure is within the range of 20 bar to 80 bar, preferably between 40 bar and 70 bar,
- hydrogen can be added for controlling the molar mass in a manner known per se.

Subsequently, the reaction mixture from step (A) is transferred to the second reactor (R-2), i.e. gas phase reactor (GPR-1), i.e. to step (D), whereby the conditions in step (D) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones.

In one embodiment of the process for producing the heterophasic polypropylene composition (HECO) the residence time in the slurry reactor (SR), e.g. loop (LR) is in the range 0.2 to 2.5 hours, e.g. 0.3 to 1.5 hours and the

residence time in the first gas phase reactor (GPR-1) will generally be 0.2 to 4.0 hours, like 0.5 to 3.0 hours.

If desired, the polymerization may be effected in a known manner under supercritical conditions in the first reactor (R-1), i.e. in the slurry reactor (SR), like in the loop reactor (LR).

The conditions in the third reactor (R-3), i.e. the second gas phase reactor (GPR-2) and any other subsequent gas phase reactors (GPR), if present, are similar to the second reactor (R-2). Also residence times in the second and the third gas phase reactor (GPR-2 and GPR-3) are in the same range or higher than in the first gas phase reactor (GPR-1).

The present process may also encompass a pre-polymerization prior to the polymerization in the first reactor (R-1). The pre-polymerization can be conducted in the first reactor (R-1), however it is preferred that the pre-polymerization takes place in a separate reactor, a so called pre-polymerization reactor.

**The glass fibers**

The third mandatory component in the fiber reinforced composite are the glass fibers. The glass fibers can be any type of glass fibers like long glass fibers or short glass fibers. However it is especially preferred that the glass fibers are short glass fibers, also known as cut glass fibers or chopped glass strands.

The short glass fibers used in the fiber reinforced composite preferably have an average fiber length prior to compounding in the range of from 2.0 to 10.0 mm, more preferably in the range of 2.0 to 8.0 mm, still more preferably in the range of 2.0 to 5.0 mm.

It is further preferred that the short glass fibers used in the fiber reinforced composite preferably have an average diameter prior to compounding of from 5 to 20 $\mu$m, more preferably from 8 to 18 $\mu$m, still more preferably 8 to 15 $\mu$m.

Preferably, the short glass fibers have an aspect ratio, defined as the ratio between average fiber length and average fiber diameter, prior to compounding of 150 to 600, preferably of 200 to 500, more preferably 250 to 400. The aspect ratio is the relation between average length and average diameter of the fibers.

**The compatibilizer**

A further component present in the fiber reinforced composite is the compatibilizer or also called coupling agent or adhesion promotor. The compatibilizer improves the adhesion between the non-polar polypropylene and the polar glass fibers.

The compatibilizer according to this invention is preferably a polar modified polypropylene. The polar modified polypropylene, like a polar modified propylene homopolymer or a polar modified copolymer, are highly compatible with the polypropylene of the fiber reinforced composite according to this invention.

In terms of structure, the polar modified polypropylenes are preferably selected from graft or block copolymers.

In this context, preference is given to polar modified polypropylenes containing groups deriving from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from $C_1$ to $C_{10}$ linear and branched dialkyl maleates, $C_1$ to $C_{10}$ linear and branched dialkyl fumarates, itaconic anhydride, $C_1$ to $C_{10}$ linear and branched itaconic acid dialkyl esters, maleic acid, fumaric acid, itaconic acid and mixtures thereof.

In a particular preferred embodiment of the present invention, the polar modified polypropylene is maleic anhydride grafted polypropylene, wherein the polypropylene is either a propylene-ethylene copolymer or a propylene homopolymer. It is especially preferred that the polar modified polypropylene is maleic anhydride grafted polypropylene, wherein the polypropylene is a propylene homopolymer.

The polar modified polypropylene, especially the maleic anhydride grafted polypropylene, can be produced in a simple manner by reactive extrusion of the polypropylene, for example with maleic anhydride in the presence of free radical generators (like organic peroxides), as disclosed for instance in EP 0 572 028.

The amounts of groups deriving from polar compounds, like the amount of maleic anhydride, in the polar modified polypropylene, are from 0.1 to 5.0 wt.%, preferably from 0.5 to 4.0 wt.%, and more preferably from 0.5 to 3.0 wt.%.

Preferably the polar modified polypropylene, like the maleic anhydride grafted polypropylene, has a melt flow rate $MFR_2$ (190 °C, 2.16 kg) measured according to ISO 1133 of at least 50 g/10min, more preferably of at least 80 g/10min, yet more preferably in the range of 50 to 500 g/10 min, still yet more preferably in the range of 70 to 250 g/10min.

**The additives**

Fiber reinforced composite according to this invention may in addition comprise additives. Typical additives are acid scavengers, antioxidants, colorants, light stabilizers, slip agents, anti-scratch agents, dispersing agents, processing aids, lubricants, pigments, e.g. carbon black, and the like.

Such additives are commercially available and for example described in "Plastic Additives Handbook", 6th edition 2009 of Hans Zweifel (pages 1141 to 1190).

Additives are frequently provided in form of a masterbatch. A masterbatch is a composition in which an additive or an additive mixture in rather high amount is dispersed in a polymer. Accordingly, the term "additive" according to the present invention also includes carrier materials, in particular polymeric carrier materials, in which the "active additive" or "active additive mixture" is dispersed.

**The process for producing the reinforced fiber composite**

The reinforced fiber composite is produced as well known in the art. Accordingly the fiber reinforced composite is manufactured by a processes comprising the steps of adding

(a) the polypropylene (PP1),
(b) the heterophasic propylene copolymer (HECO),
(c) the glass fibers,
(d) the compatibilizer, and
(e) optionally additives

to an extruder and extruding the same by obtaining said fiber reinforced composite.

For the extruding, i.e. melt blending, the individual components of the composite a conventional compounding or blending apparatus, e.g. a Banbury mixer, a 2-roll rubber mill, Buss-co-kneader or a twin screw extruder may be used. The fiber reinforced composite recovered from the extruder/mixer is usually in the form of granules. These granules are then preferably further processed, e.g. by injection moulding to generate articles and products of the inventive composite.

It is especially preferred that the fiber reinforced composite according to the present invention is prepared by melt blending the individual components in an extruder, preferably a twin screw extruder.

In particular, it is preferred that the fiber reinforced composite according to the present invention is obtained by a process comprising the steps of

(a) feeding the polypropylene (PP1), the heterophasic propylene copolymer (HECO), the compatibilizer (CA) and optionally the additives (AD) into an extruder, preferably a twin screw extruder,
(b) melt-kneading the composition obtained in step (a) at a temperature of 200 to 270 °C,
(c) feeding the (short) glass fibers (GF) into the extruder, preferably twin screw extruder, containing the composition obtained in step (b), and
(d) melt-kneading the composition obtained in step (c) at a temperature of 200 to 270 °C, thereby obtaining the fiber reinforced composite.

**The Articles**

The present invention is further directed to an article, preferably an automotive article, comprising at least 95 wt.-%, more preferably at least 98 wt.-%, yet more preferably consist, of the fiber reinforced composite according to the present invention.

**Especially preferred embodiments**

Especially preferred embodiments are as follows:
One embodiment provides a fiber reinforced composite comprising

(a) 30 to 60 wt.-%, based on the fiber reinforced composite, of a polypropylene (PP1),
(b) 10 to 40 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 10 to 40 wt.-%, based on the fiber reinforced composite, of glass fibers (GF), and
(d) 0.05 to 5.0 wt.-%, based on the fiber reinforced composite, of a compatibilizer (CA), the total amount of the polypropylene (PP1), the heterophasic propylene copolymer (HECO), the glass fibers (GF) and the compatibilizer (CA) in the fiber reinforced composite being at least 95 wt.-%,

wherein further the polypropylene (PP1) has

(i) a melt flow rate $MFR_2$ (230 °C, 2.16 kg) measured according to ISO 1133 in the range of 40.0 to 250 g/10min,
(ii) a comonomer content determined by $^{13}C$-NMR spectroscopy of not more than 0.5 wt.-%, the comonomer being ethylene,
(iii) a molecular weight distribution (MWD) determined by gel permeation chromatography (GPC) in the range of more than 4.5 to below 8.5, and
(iv) 2,1 regio-defects determined by $^{13}C$-NMR spectroscopy in the range of 0.20 to 1.00 %, wherein still further the propylene homopolymer (H-PP2) of the heterophasic propylene copolymer (HECO) has
(v) 2,1 regio-defects determined by $^{13}C$-NMR spectroscopy in the range of 0 to below 0.10 %.

In one embodiment, the fiber reinforced composite has a melt flow rate $MFR_2$ (230 °C, 2.16 kg) measured according to ISO 1133 in the range of 8.0 to 50 g/10min.

In one embodiment, the glass fibers are embedded in a continuous phase, said continuous phase comprises at least 98 wt.-% of a mixture consisting of the polypropylene (PP1) and the heterophasic propylene copolymer (HECO).

In one embodiment, the propylene homopolymer (H-PP2) of the heterophasic propylene copolymer (HECO) has a melt flow rate $MFR_2$ (230 °C, 2.16 kg) measured according to ISO 1133 in the range of 40.0 to 250 g/10min with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.80 to 1.20.

In one embodiment, the weight ratio between the mixture of the polypropylene (PP1) and the propylene homopolymer (H-PP2) and the ethylene-propylene rubber (EPR) [((PP1)+(H-PP2)/(EPR)] is in the range of 75:25 to 95:5.

In one embodiment, the weight ratio between the polypropylene (PP1) and the propylene homopolymer (H-PP2) of the heterophasic propylene copolymer (HECO) [(PP1)/(H-PP2)] is in the range of 60:40 to 80:20.

In one embodiment, the propylene homopolymer (H-PP2) of the heterophasic propylene copolymer (HECO) has a molecular weight distribution (MWD) determined by gel permeation chromatography (GPC) in the range of more than 5.0 to below 10.0.

In one embodiment, the propylene homopolymer (H-PP2) of the heterophasic propylene copolymer (HECO) has a melting temperature Tm determined according to differential scanning calorimetry (DSC) of at least 160 °C.

In one embodiment, the heterophasic propylene copolymer (HECO) has a melt flow rate $MFR_2$ (230 °C, 2.16 kg) measured according to ISO 1133 in the range of 10 to 50 g/10min.

In one embodiment, the heterophasic propylene copolymer (HECO) has a xylene cold soluble (XCS) content determined at 25 °C according ISO 16152 in the range of 22 to 45 wt.-%.

In one embodiment, the heterophasic propylene copolymer (HECO) has an ethylene content determined by $^{13}C$-NMR of the xylene cold soluble (XCS) fraction in the range of 40 to 60 mol-%.

In one embodiment, the heterophasic propylene copolymer (HECO) has an ethylene content in the range of 15 to 33 mol-%.

In one embodiment, the xylene cold soluble (XCS) fraction of the heterophasic propylene copolymer (HECO) has an intrinsic viscosity (IV) measured according to ISO 1628/1 (at 135 °C in decalin) in the range of 2.0 to 5.0 dl/g.

In one embodiment, the heterophasic propylene copolymer (HECO) is non-visbroken.

In one embodiment, the polypropylene (PP1) has a fraction which elutes below 100 °C by Temperature Rising Elution fractionation (TREF) in the range of 12 to 20 wt.-%.

In one embodiment, the polypropylene (PP1) is a propylene homopolymer.

In one embodiment, the polypropylene (PP1) is non-visbroken.

In one embodiment, the polypropylene (PP1) has a melting temperature Tm determined according to differential scanning calorimetry (DSC) in the range of 150 to 159 °C.

In one embodiment, the polypropylene (PP1) has a xylene cold soluble (XCS) content determined at 25 °C according ISO 16152 in the range of 0.8 to 2.5 wt.-%.

In one embodiment, the polypropylene (PP1) is produced by polymerizing propylene and optionally ethylene in the presence of the metallocene catalyst having the formula (I)

1. 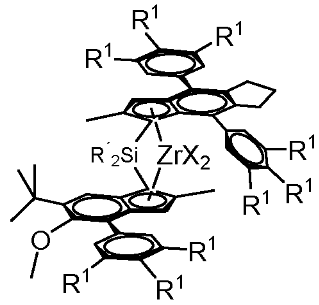 (I)

wherein each R1 are independently the same or can be different and are hydrogen or a linear or branched C1-C6 alkyl group, whereby at least on R1 per phenyl group is not hydrogen,
R' is a C1-C10 hydrocarbyl group, preferably a C1-C4 hydrocarbyl group and more preferably a methyl group and X independently is a hydrogen atom, a halogen atom, C1-C6 alkoxy group, C1-C6 alkyl group, phenyl or benzyl group.

In one embodiment, the glass fibers (GF) are short glass fibers, and optionally the glass fibers (GF) have an average fiber length of 2.0 to 10.0 mm prior to compounding and optionally an average diameter of 5 to 20 $\mu$m.

In one embodiment, the compatibilizer (CA) is a polar modified polypropylene, preferably is a maleic anhydride grafted polypropylene, and optionally the maleic anhydride grafted polypropylene has a maleic anhydride content of 0.1 to 5.0 wt.-% and preferably a melt flow rate $MFR_2$ (190 °C, 2.16 kg) measured according to ISO 1133 of at least 70 g/10min, more preferably in the range of 80 to 250 g/10min.

In one embodiment, the fiber reinforced composite consists of

(a) 35 to 55 wt.-%, based on the fiber reinforced composite, of the polypropylene (PP1),
(b) 20 to 35 wt.-%, based on the fiber reinforced composite, of the heterophasic propylene copolymer (HECO),
(c) 15 to 30 wt.-%, based on the fiber reinforced composite, of glass fibers (GF),
(d) 0.5 to 5.0 wt.-%, based on the fiber reinforced composite, of the compatibilizer (CA), and
(e) 0.1 to 5.0 wt.-%, based on the fiber reinforced composite, of additives.

The invention is now described by way of examples.

## EXAMPLES

### A. Determination methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the ethylene-propylene copolymer.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

Approximately 200 mg of material was dissolved in 1,2-tetrachloroethane-dz (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ \text{mol-\%} = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * f_E$$

The weight percent comonomer incorporation was calculated from the mole fraction:

$$E\ [wt.\text{-}\%] = 100 * (f_E * 28.06) / ((f_E * 28.06) + ((1\text{-}f_E) * 42.08))$$

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of the polypropylene is determined at a temperature of 230 °C and a load of 2.16 kg.

**Calculation** of melt flow rate $MFR_2$ (230 °C) of the polypropylene produced in the 1st gas phase reactor (GPR1):

$$MFR(PP2) = 10^{\left[\frac{\log(MFR(PP)) - w(PP1)\ x\ \log(MFR(PP1))}{w(PP2)}\right]}$$

wherein

| | |
|---|---|
| w(PP1) | is the weight fraction [in wt.-%] of the polypropylene fraction produced in the loop reactor and the preoplymerization reactor, |
| w(PP2) | is the weight fraction [in wt.-%] of the polypropylene fraction produced in 1st gas phase reactor (GPR1), |
| MFR(PP1) | is the melt flow rate $MFR_2$ (230 °C) [in g/10min] of the polypropylene fraction taken from the loop reactor, |
| MFR(PP) | is the melt flow rate $MFR_2$ (230 °C) [in g/10min] of the polypropylene taken from the 1st gas phase reactor, |
| MFR(PP2) | is the calculated melt flow rate $MFR_2$ (230 °C) [in g/10min] of the polypropylene fraction produced in the 1st gas phase reactor (GPR1). |

**Molar mass (ethylene-propylene copolymer)**

Molar mass averages (Mz, Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i\ x\ M_i)}{\sum A_i}$$

$$M_z = \frac{\sum_{i=1}^{N} (A_i\ x\ M_i^2)}{\sum (A_i / M_i)}$$

where Ai and Mi are the chromatographic peak slice area and polyolefin molecular weight (MW).

A PolymerChar GPC instrument, equipped with infrared (IR) detector was used with 3 × Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**TREF method**

The chemical composition distribution was determined by analytical Temperature Rising Elution fractionation as described by Soares, J.B.P., Fractionation, In: Encyclopedia Of Polymer Science and Technology, John Wiley & Sons, New York, pp. 75-131, Vol. 10, 2001.

The separation of the polymer in TREF is according to their crystallinity in solution. The TREF profiles were generated using a CRYSTAF-TREF 200+ instrument manufactured by PolymerChar S.A. (Valencia, Spain).

The polymer sample was dissolved in 1 ,2,4-trichlorobenzene (TCB, stabilized with 250 mg/L 2,6-Di tert butyl-4-methyl-phenol) at a concentration between 1.5 and 2.0 mg/ml at 150 °C for 180 min and 1.8 mL of the sample solution was injected into the column (8 mm inner diameter, 15 cm length, filled with inert e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1 ,2,4-trichlorobenzene (stabilized with 250 mg/L 2,6-Di tert butyl-4-methyl-phenol) at a flow rate of 0.5 mlJmin at 35 °C for a period of 10 min followed by a temperature increase from 35 °C to 135 °C at a constant heating rate of 0.5 °C/ram with a flow rate of 0.5ml/min. The concentration of the polymer during elution was recorded by an infrared detector (measuring the C-H absorption at 3.5 micrometer wavelength). The detector response was plotted as a function of the temperature.

The normalized concentration plot was presented as fractogram together with the cumulative concentration signal normalized to 100.

Definition of High crystalline fraction (HCF) and Low crystalline fraction (LCF):

The high crystalline fraction (HCF) is the amount in wt.-% of the polymer fraction which elutes at 100 °C and above elution temperature.

The low crystalline fraction (LCF) is than the amount in wt.-% of the polymer fraction which elutes between 35 and below 100 °C.

**The xylene soluble fraction at room temperature (XCS, wt.-%):**

The amount of the polymer soluble in xylene was determined at 25 °C according to ISO 16152; 5th edition; 2005-07-01.

**Intrinsic viscosity:** The intrinsic viscosity (IV) was measured according to DIN ISO 1628/1, October 1999, in Decalin at 135°C.

**DSC analysis, melting temperature ($T_m$) and melting enthalpy ($H_m$), crystallization temperature ($T_c$) and crystallization enthalpy ($H_c$):** measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) were determined from the cooling step, while the melting temperature ($T_m$) and the melting enthalpy ($H_m$) were determined from the second heating step.

**Spiral flow length**

Spiral flow length: This method specifies a principle to test, by use of injection moulding, the flowability of a plastic material taking into consideration the cooling effect of the mould. Plastic is melted down and plasticized by a screw in a warm cylinder. Melted plastic is injected by the screw function as a piston, into a cavity with a certain speed and pressure. The cavity is shaped as a spiral with a divided scale for length measurement printed in the steel. That gives the possibility to read the flow length directly on the injection moulded test spiral specimen.

Spiral Test was carried out using an Engel ES 1050/250 HL injection moulding apparatus with a spiral mould and pressure of 1400 bar

screw diameter: 55 mm
spec, injection pressure: 1400 bar
tool form: round, spiral form; length 1545 mm; profile: trapeze 2.1 mm thickness; cross sectional area 20.16 $mm^2$
temperature in pre-chamber and die: 230°C
temperature in zone 2/zone 3/zone 4/zone 5/zone 6: 230°C/230°C/220°C/220°C/200°C
injection cycle: injection time including holding: 6 s
cooling time: 10 s
screw speed: 50 mm/sec
tool temperature: 40°C

The spiral flow length can be determined immediately after the injection operation.

**Flexural Modulus**

The Flexural Modulus was determined according to ISO 178 method A (3-point bending test) on 80×10×4 $mm^3$ specimens. Following the standard, a test speed of 2 mm/min and a span length of 16 times the thickness was used. The testing temperature was 23±2° C. Injection moulding was carried out according to ISO 19069-2 using a melt temperature of 200°C for all materials irrespective of material melt flow rate.

**Tensile modulus, tensile strength and elongation at break**

Tensile modulus, tensile strength and elongation at break are measured according to ISO 527-2 using injection moulded specimens as described in EN ISO 1873-2 (1 B dog bone shape, 4 mm thickness).

**Charpy unnotched impact strength**

The Charpy unnotched impact strength was measured according to ISO 179 1eU at +23 °C using injection moulded bar test specimens of 80×10×4 $mm^3$ prepared in the same way as for flexural modulus.

**Heat DeflectionTemperature (HDT):**

The HDT was determined on injection moulded test specimens of 80×10×4 $mm^3$ prepared in the same way as for flexural modulus. The test was performed on flatwise supported specimens according to ISO 75, condition A, with a nominal surface stress of 1.80 MPa.

**VOC and FOG**

VOC values and FOG values were measured according to VDA 278 (October 2011; Thermal Desorption Analysis of Organic Emissions for the Characterization of Non-Metallic Materials for Automobiles, VDA Verband der Automobilindustrie) after sample preparation of injection moulding plaques according to EN ISO 19069-2:2016. These plaques were packed in aluminium-composite foils immediately after production and the foils were sealed. According to the VDA 278 October 2011 the VOC value is defined as "the total of the readily volatile to medium volatile substances. It is calculated as toluene equivalent. The method described in this recommendation allows substances in the boiling / elution range up to n-pentacosane ($C_{25}$) to be determined and analyzed."

The FOG value is defined as "the total of substances with low volatility, which elute from the retention time of n-tetradecane (inclusive)". It is calculated as hexadecane equivalent. Substances in the boiling range of n-alkanes "$C_{14}$" to "$C_{32}$" are determined and analysed.

**Average fiber diameter**

The average fiber diameter is determined according to ISO 1888:2006(E), Method B, microscope magnification of 1000.

**B. Preparation of polymer composition**

a) **Preparation of the Single site catalyst system**

Catalyst for the inventive examples

***<u>Catalyst complex</u>***

The following metallocene complex has been used as described in WO 2019/179959:

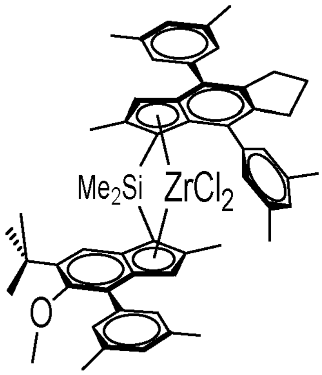

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiOz was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system (SSCS) preparation***

30 wt.% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring stirring.

Dried catalyst was sampled in the form of pink free flowing powder containing 13.9% Al and 0.11% Zr.

**b) Preparation of the Ziegler-Natta catalyst system**

A Ziegler-Natta catalyst system has been used

**Used chemicals:**

20 % solution in toluene of butyl ethyl magnesium (Mg(Bu)(Et), BEM), provided by Chemtura 2-ethylhexanol, provided by Amphochem
3-Butoxy-2-propanol - (DOWANOL™ PnB), provided by Dow
bis(2-ethylhexyl)citraconate, provided by SynphaBase
$TiCl_4$, provided by Millenium Chemicals
Toluene, provided by Aspokem
Viscoplex® 1-254, provided by Evonik
Heptane, provided by Chevron

**Preparation of a Mg alkoxy compound**

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 l stainless

steel reactor. During the addition the reactor contents were maintained below 45 °C. After addition was completed, mixing (70 rpm) of the reaction mixture was continued at 60 °C for 30 minutes. After cooling to room temperature 2.3 kg of the donor bis(2-ethylhexyl)citraconate was added to the Mg-alkoxide solution keeping temperature below 25 °C. Mixing was continued for 15 minutes under stirring (70 rpm).

***Preparation of solid catalyst component ZNCS***

20.3 kg of $TiCl_4$ and 1.1 kg of toluene were added into a 20 l stainless steel reactor. Under 350 rpm mixing and keeping the temperature at 0 °C, 14.5 kg of the prepared Mg alkoxy compound was added during 1.5 hours. 1.7 l of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50 °C and during the second wash to room temperature.

The thus obtained catalyst was used along with triethyl-aluminium (TEAL) as co-catalyst and dicyclo pentyl dimethoxy silane (D-donor) as donor. The ratio used was:

TEAL/Ti: 230 mol/mol
TEAL/Donor: 40 mol/mol

**Table 1: Polymerization conditions of Polymers 1 and 2 and properties of Polymers 1 to 3**

| **Polymer** | | Poly1 | Poly2 | Poly3[A] |
|---|---|---|---|---|
| Catalyst | | SSCS | SSCS | |
| **Prepoly reactor** | | | | |
| Temp. | [°C] | 20 | 20 | |
| Press. | [kPa] | 5330 | 5330 | |
| Residence time | [min] | 20 | 20 | |
| **Loop reactor** | | | | |
| Temp. | [°C] | 75 | 75 | |
| Press. | [kPa] | 4900 | 4900 | |
| Residence time | [h] | 0.45 | 0.25 | |
| Feed H2/C3 ratio | [mol/kmol] | 0.37 | 0.28 | |
| Polymer Split* | [wt.-%] | 68 | 61 | |
| $MFR_2$* | [g/10 min] | 70 | 27.5 | |
| XCS* | [wt.-%] | 1.0 | 0.6 | |
| **GPR** | | | | |
| Temp. | [°C] | 80 | 80 | |
| Press. | [kPa] | 2500 | 2500 | |
| Residence time | [h] | 1.6 | 2.2 | |
| H2/C3 ratio | [mol/kmol] | 2.5 | 23.4 | |
| Polymer Split | [wt.-%] | 32 | 39 | |
| $MFR_2$** | [g/10 min] | 98 | 313 | |
| **Pellet** | | | | |
| $MFR_2$ | [g/10 min] | 84 | 75 | 75 |
| Mw | [-] | 122,000 | 137,000 | 137,000 |
| MWD | [-] | 3.0 | 6.1 | 6.4 |

(continued)

| Pellet | | | | |
|---|---|---|---|---|
| mmmm | [mol-%] | 98.9 | 99.4 | 94.5 |
| 2,1 erythro | [mol-%] | 0.83 | 0.72 | 0 |
| Tm | [°C] | 153 | 153 | 162 |
| Tc | [°C] | 118 | 118 | 116 |
| Fraction < 100 °C | [wt.-%] | 10.25 | 16.05 | 9.41 |
| XCS | [wt.-%] | 1.7 | 1.9 | 3.5 |
| Flexural Modulus | [MPa] | 1480 | 1580 | 1578 |

[A] "Poly3" is the is the commercial propylene homopolymer "HJ120UB" of Borealis produced with a 4th generation Ziegler-Natta catalyst

* "MFRz", "XCS" and "Polymer Split" are measured on a sample taken from the loop reactor, i.e. is the combination of Prepoly Reactor and Loop reactor

** "$MFR_2$" is calculated from the $MFR_2$ measured in the loop reactor and the $MFR_2$ of the pellet using the formula given above defining the measurement of $MFR_2$

**Table 2: Polymerization conditions and properties of Polymer 4**

| **Polymer** | | Poly4 |
|---|---|---|
| Catalyst | | ZNCS |
| **Prepoly reactor** | | |
| Temp. | [°C] | 30 |
| Press. | [kPa] | 5340 |
| Residence time | [min] | 5 |
| **Loop reactor** | | |
| Temp. | [°C] | 72 |
| Press. | [kPa] | 5280 |
| Residence time | [h] | 0.35 |
| Feed H2/C3 ratio | [mol/kmol] | 18.8 |
| Polymer Split* | [wt.-%] | 30.0 |
| $MFR_2$* | [g/10 min] | 110 |
| **GPR1** | | |
| Temp. | [°C] | 80 |
| Press. | [kPa] | 2500 |
| Residence time | [h] | 1.6 |
| H2/C3 ratio | [mol/kmol] | 136.8 |
| Polymer Split | [wt.-%] | 35.0 |
| $MFR_2$** | [g/10 min] | 80 |
| $MFR_2$*** (GPR1) | [g/10 min] | 62 |
| MWD** | [-] | 7.5 |
| Tm** | [°C] | 165 |
| 2,1 erythro** | [mol-%] | 0 |
| XCS** | [wt.-%] | 2.0 |

(continued)

| GPR2 | | |
|---|---|---|
| Temp. | [°C] | 70 |
| Press. | [kPa] | 2300 |
| Residence time | [h] | 2.2 |
| H2/C3 ratio | [mol/kmol] | 119.0 |
| Feed C2/C3 ratio | [mol/kmol] | 514.9 |
| Polymer Split | [wt.-%] | 17.0 |
| C2**** | [mol-%] | 11.4 |
| $MFR_2$**** | [g/10 min] | 15 |
| **GPR3** | | |
| Temp. | [°C] | 85 |
| Press. | [kPa] | 2200 |
| Residence time | [h] | 2.2 |
| H2/C3 ratio | [mol/kmol] | 285.6 |
| Feed C2/C3 ratio | [mol/kmol] | 1429 |
| Polymer Split | [wt.-%] | 18.0 |
| C2 (total) | [mol-%] | 25.9 |
| $MFR_2$ | [g/10 min] | 18 |
| Tm | [°C] | 165 |
| Tc | [°C] | 115 |
| XCS | [wt.-%] | 31.5 |
| C2(XCS) | [mol-%] | 54.9 |
| IV(XCS) | [dl/g] | 2.3 |
| Flexural Modulus | [MPa] | 800 |

* "$MFR_2$" and "Polymer Split" are measured on a sample taken from the loop reactor, i.e. is the combination of Prepoly Reactor and Loop reactor

** "$MFR_2$", "MWD", "2,1 erythro", "Tm", and "XCS" are measured on a sample taken from the GPR1, i.e. is the combination of Prepoly Reactor, Loop reactor and 1st gas phase reactor (GPR1), i.e. the matrix (propylene homopolymer (H-PP2)) of the heterophasic propylene copolymer (HECO)

*** "$MFR_2$" is calculated from the $MFR_2$ measured in the loop reactor and the $MFR_2$ meaasured in the 1st gas phase reactor (GPR1) using the formula given above defining the measurement of $MFR_2$

**** "C2" and "$MFR_2$" are measured on a sample taken from the GPR2

**Table 3: Fiber reinforced composites and properties thereof**

| | | CE1 | CE2 | IE1 |
|---|---|---|---|---|
| Poly1 | [wt.-%] | - | 49.1 | - |
| Poly2 | [wt.-%] | - | - | 49.1 |
| Poly3 | [wt.-%] | 49.1 | - | - |
| Poly4 | [wt.-%] | 28.0 | 28.0 | 28.0 |
| GF | [wt.-%] | 20 | 20 | 20 |
| AP | [wt.-%] | 1.5 | 1.5 | 1.5 |
| AO | [wt.-%] | 0.4 | 0.4 | 0.4 |

(continued)

| | | CE1 | CE2 | IE1 |
|---|---|---|---|---|
| CB | [wt.-%] | 0.5 | 0.5 | 0.5 |
| HPP | [wt.-%] | 0.5 | 0.5 | 0.5 |
| $MFR_2$ | [g/10min] | 12.4 | 16.7 | 13.3 |
| Spiral (1400 bar) | [mm] | 1174 | 1117 | 1223 |
| Tensile Modulus | [MPa] | 4693 | 4598 | 4648 |
| Tensile strength | [MPa] | 83.8 | 82.0 | 83.7 |
| Elongation at break | [%] | 3.17 | 3.27 | 3.18 |
| Charpy | [$kJ/m^2$] | 48.6 | 50.6 | 50.3 |
| HDT | [°C] | 159.1 | 153.5 | 153.1 |
| VOC | [μg/g] | 159 | 45 | 86 |
| FOG | [μg/g] | 497 | 206 | 355 |

"AO" is a mixture of the sterically hindered phenol pentaerythrityl-tetrakis(3-(3',5'-di-tert. butyl-4-hydroxyphenyl)-propionate (CAS-no. 6683-19-8, commercially available as Irganox 1010 from BASF SE, Germany) and the phosphorous based antioxidant tris (2,4-di-t-butylphenyl) phosphite (CAS-no. 31570-04-4, commercially available as Irgafos 168 from BASF SE, Germany) in the weight ratio of 1:1;
"GF" is the commercial product ECS 03 T-480H of Nippon Electric Glass Co., Ltd. having a filament diameter of 10.5 μm and a strand length of 3 mm;
"AP" is the adhesion promoter SCONA TPPP 8112 GA by Scona being a polypropylene functionalized with maleic anhydride having a maleic anhydride content of 1.4 wt.-% and a MFR (190 °C, 2.16 kg) about 80 g/10 min;
"CB" is the commerical carbon black masterbatch "Plasblak PPP6331" of Cabot Corporation, Germany
"HPP" is the commercial propylene homopolymer HC001 of Borealis AG having a melt flow rate $MFR_2$ of 2.7 g/10min used as carrier material for the additives.

**Claims**

**1.** Fiber reinforced composite comprising

(a) 30 to 60 wt.-%, based on the fiber reinforced composite, of a polypropylene (PP1),
(b) 10 to 40 wt.-%, based on the fiber reinforced composite, of a heterophasic propylene copolymer (HECO), wherein said heterophasic propylene copolymer (HECO) comprises a propylene homopolymer (H-PP2) and an ethylene-propylene rubber (EPR),
(c) 10 to 40 wt.-%, based on the fiber reinforced composite, of glass fibers (GF), and
(d) 0.05 to 5.0 wt.-%, based on the fiber reinforced composite, of a compatibilizer (CA),
the total amount of the polypropylene (PP1), the heterophasic propylene copolymer (HECO), the glass fibers (GF) and the compatibilizer (CA) in the fiber reinforced composite being at least 95 wt.-%,
wherein further the polypropylene (PP1) has

(i) a melt flow rate $MFR_2$ (230 °C, 2.16 kg) measured according to ISO 1133 in the range of 40.0 to 250 g/10min,
(ii) a comonomer content determined by $^{13}C$-NMR spectroscopy of not more than 0.5 wt.-%, the comonomer if present being ethylene,
(iii) a molecular weight distribution (MWD) determined by gel permeation chromatography (GPC) in the range of more than 4.5 to below 8.5, and
(iv) 2,1 regio-defects determined by $^{13}C$-NMR spectroscopy in the range of 0.20 to 1.00 %,

wherein still further the propylene homopolymer (H-PP2) of the heterophasic propylene copolymer (HECO) has (v) 2,1 regio-defects determined by $^{13}C$-NMR spectroscopy in the range of 0 to below 0.10 %.

**2.** Fiber reinforced composite according to claim 1 wherein the glass fibers are embedded in a continuous phase, said

continuous phase comprises at least 98 wt.-% of a mixture consisting of the polypropylene (PP1) and the heterophasic propylene copolymer (HECO).

**3.** Fiber reinforced composite according to claim 1or 2 wherein the propylene homopolymer (H-PP2) of the heterophasic propylene copolymer (HECO) has a melt flow rate $MFR_2$ (230 °C, 2.16 kg) measured according to ISO 1133 in the range of 40.0 to 250 g/10min with the proviso that the melt flow ratio $MFR_2$ between the polypropylene (PP1) and the propylene homopolymer (H-PP2) of the heterophasic propylene copolymer (HECO) [$MFR_2$(PP1)/$MFR_2$(H-PP2)] is in the range of 0.80 to 1.20.

**4.** Fiber reinforced composite according to any one of the preceding claims wherein the weight ratio between the mixture of the polypropylene (PP1) and the propylene homopolymer (H-PP2) and the ethylene-propylene rubber (EPR) [((PP1)+(H-PP2)/(EPR)] is in the range of 75:25 to 95:5.

**5.** Fiber reinforced composite according to any one of the preceding claims wherein the weight ratio between the polypropylene (PP1) and the propylene homopolymer (H-PP2) of the heterophasic propylene copolymer (HECO) [(PP1)/(H-PP2)] is in the range of 60:40 to 80:20.

**6.** Fiber reinforced composite according to any one of the preceding claims wherein the propylene homopolymer (H-PP2) of the heterophasic propylene copolymer (HECO) has a molecular weight distribution (MWD) determined by gel permeation chromatography (GPC) in the range of more than 5.0 to below 10.0.

**7.** Fiber reinforced composite according to any one of the preceding claims wherein the heterophasic propylene copolymer (HECO) has a melt flow rate $MFR_2$ (230 °C, 2.16 kg) measured according to ISO 1133 in the range of 10 to 50 g/10min and an ethylene content determined by $^{13}$C-NMR spectroscopy in the range of 15 to 33 mol-%.

**8.** Fiber reinforced composite according to any one of the preceding claims wherein the heterophasic propylene copolymer (HECO) has a xylene cold soluble (XCS) content determined at 25 °C according ISO 16152 in the range of 22 to 45 wt.-% and the heterophasic propylene copolymer (HECO) has an ethylene content determined by $^{13}$C-NMR of the xylene cold soluble (XCS) fraction in the range of 40 to 60 mol-%.

**9.** Fiber reinforced composite according to any one of the preceding claims wherein the xylene cold soluble (XCS) fraction of the heterophasic propylene copolymer (HECO) has an intrinsic viscosity (IV) measured according to ISO 1628/1 (at 135 °C in decalin) in the range of 2.0 to 5.0 dl/g.

**10.** Fiber reinforced composite according to any one of the preceding claims wherein the polypropylene (PP1) has a fraction which elutes below 100 °C by Temperature Rising Elution fractionation (TREF) in the range of 12 to 20 wt.-%.

**11.** Fiber reinforced composite according to any one of the preceding claims wherein the polypropylene (PP1) is a propylene homopolymer.

**12.** Fiber reinforced composite according to any one of the preceding claims wherein the glass fibers (GF) are short glass fibers, optionally said short glass fibers (GF) have an average fiber length of 2.0 to 10.0 mm prior to compounding.

**13.** Fiber reinforced composite according to any one of the preceding claims wherein the compatibilizer (CA) is a polar modified polypropylene, preferably is a maleic anhydride grafted polypropylene.

**14.** Fiber reinforced composite according to claim 13 wherein the maleic anhydride grafted polypropylene has a maleic anhydride content of 0.1 to 5.0 wt.-% and preferably a melt flow rate $MFR_2$ (190 °C, 2.16 kg) measured according to ISO 1133 70 to 250 g/10min.

**15.** Fiber reinforced composite according to any one of the preceding claims wherein the fiber reinforced composite consists of

(a) 35 to 55 wt.-%, based on the fiber reinforced composite, of the polypropylene (PP1),
(b) 20 to 35 wt.-%, based on the fiber reinforced composite, of the heterophasic propylene copolymer (HECO),
(c) 15 to 30 wt.-%, based on the fiber reinforced composite, of glass fibers (GF),
(d) 0.5 to 5.0 wt.-%, based on the fiber reinforced composite, of the compatibilizer (CA), and
(e) 0.1 to 5.0 wt.-%, based on the fiber reinforced composite, of additives.

**Patentansprüche**

1. Faserverstärkter Verbundwerkstoff, umfassend

(a) 30 bis 60 Gew.-%, bezogen auf den faserverstärkten Verbundwerkstoff, eines Polypropylens (PP1),
(b) 10 bis 40 Gew.-%, bezogen auf den faserverstärkten Verbundwerkstoff, eines heterophasigen Propylencopolymers (HECO), wobei das heterophasige Propylencopolymer (HECO) ein Propylenhomopolymer (H-PP2) und einen Ethylen-Propylenkautschuk (EPR) umfasst,
(c) 10 bis 40 Gew.-%, bezogen auf den faserverstärkten Verbundwerkstoff, an Glasfasern (GF), und
(d) 0,05 bis 5,0 Gew.-%, bezogen auf den faserverstärkten Verbundstoff, eines Kompatibilisierungsmittels (CA), wobei die Gesamtmenge des Polypropylens (PP1), des heterophasigen Propylencopolymers (HECO), der Glasfasern (GF) und des Kompatibilisierungsmittels (CA) in dem faserverstärkten Verbundwerkstoff mindestens 95 Gew.-% beträgt,
wobei das Polypropylen (PP1) außerdem Folgendes aufweist

(i) eine Schmelzflussrate $MFR_2$ (230 °C, 2,16 kg) gemessen nach ISO 1133 im Bereich von 40,0 bis 250 g/10min,
(ii) einen durch $^{13}C$-NMR-Spektroskopie bestimmten Comonomergehalt von höchstens 0,5 Gew.-%, wobei das Comonomer, falls vorhanden, Ethylen ist,
(iii) eine durch Gelpermeationschromatographie (GPC) bestimmte Molekulargewichtsverteilung (MWD) im Bereich von mehr als 4,5 bis unter 8,5, und
(iv) 2,1-Regio-Defekte, bestimmt durch $^{13}C$-NMR-Spektroskopie im Bereich von 0,20 bis 1,00 %,

wobei weiterhin das Propylenhomopolymer (H-PP2) des heterophasigen Propylencopolymers (HECO)
(v) 2,1- Regio-Defekte, bestimmt durch $^{13}C$-NMR-Spektroskopie im Bereich von 0 bis unter 0,10 %, aufweist.

2. Faserverstärkter Verbundwerkstoff nach Anspruch 1, bei dem die Glasfasern in eine kontinuierliche Phase eingebettet sind, wobei die kontinuierliche Phase zu mindestens 98 Gew.-% aus einem Gemisch aus Polypropylen (PP1) und heterophasigem Propylencopolymer (HECO) besteht.

3. Faserverstärkter Verbundwerkstoff nach Anspruch 1 oder 2, wobei das Propylenhomopolymer (H-PP2) des heterophasigen Propylencopolymers (HECO) eine Schmelzflussrate $MFR_2$ (230 °C, 2,16 kg), gemessen nach ISO 1133, im Bereich von 40,0 bis 250 g/10min aufweist, mit der Maßgabe, dass das Schmelzflussverhältnis $MFR_2$ zwischen dem Polypropylen (PP1) und dem PropylenHomopolymer (H-PP2) des heterophasigen Propylen-Copolymers (HECO) [$MFR_2$ (PP1)/$MFR_2$ (H-PP2)] im Bereich von 0,80 bis 1,20 liegt.

4. Faserverstärkter Verbundwerkstoff nach einem der vorhergehenden Ansprüche, wobei das Gewichtsverhältnis zwischen der Mischung aus dem Polypropylen (PP1) und dem Propylenhomopolymer (H-PP2) und dem Ethylen-Propylen-Kautschuk (EPR) [((PP1)+(H-PP2)/(EPR)] im Bereich von 75:25 bis 95:5 liegt.

5. Faserverstärkter Verbundwerkstoff nach einem der vorhergehenden Ansprüche, wobei das Gewichtsverhältnis zwischen dem Polypropylen (PP1) und dem Propylenhomopolymer (H-PP2) des heterophasigen Propylencopolymers (HECO) [(PP1)/(H-PP2)] im Bereich von 60:40 bis 80:20 liegt.

6. Faserverstärkter Verbundwerkstoff nach einem der vorhergehenden Ansprüche, wobei das Propylenhomopolymer (H-PP2) des heterophasigen Propylencopolymers (HECO) eine durch Gelpermeationschromatographie (GPC) bestimmte Molekulargewichtsverteilung (MWD) im Bereich von mehr als 5,0 bis unter 10,0 aufweist.

7. Faserverstärkter Verbundwerkstoff nach einem der vorhergehenden Ansprüche, wobei das heterophasige Propylencopolymer (HECO) eine Schmelzflussrate $MFR_2$ (230 °C, 2,16 kg), gemessen nach ISO 1133, im Bereich von 10 bis 50 g/10min und einen Ethylengehalt, bestimmt durch $^{13}C$-NMR-Spektroskopie, im Bereich von 15 bis 33 Mol-% aufweist.

8. Faserverstärkter Verbundwerkstoff nach einem der vorhergehenden Ansprüche, wobei das heterophasige Propylencopolymer (HECO) eine in Xylol kalt lösliche (XCS) Fraktion, bestimmt bei 25°C gemäß ISO 16152, im Bereich von 22 bis 45 Gew.-% aufweist, und das heterophasige Propylencopolymer (HECO) einen Ethylengehalt der in Xylol kalt löslichen (XCS) Fraktion im Bereich von 40 bis 60 Mol-% aufweist, bestimmt durch $^{13}C$-NMR.

9. Faserverstärkter Verbundwerkstoff nach einem der vorhergehenden Ansprüche, wobei die in Xylol kalt lösliche (XCS) Fraktion des heterophasigen Propylencopolymers (HECO) eine nach ISO 1628/1 (bei 135 °C in Decalin) gemessene intrinsische Viskosität (IV) im Bereich von 2,0 bis 5,0 dl/g aufweist.

10. Faserverstärkter Verbundwerkstoff nach einem der vorhergehenden Ansprüche, wobei das Polypropylen (PP1) eine Fraktion, die unterhalb von 100 °C durch Temperaturanstiegs-Elutionsfraktionierung (TREF) eluiert, im Bereich von 12 bis 20 Gew.-% aufweist.

11. Faserverstärkter Verbundwerkstoff nach einem der vorhergehenden Ansprüche, wobei das Polypropylen (PP1) ein Propylenhomopolymer ist.

12. Faserverstärkter Verbundwerkstoff nach einem der vorhergehenden Ansprüche, wobei die Glasfasern (GF) kurze Glasfasern sind, wobei die kurzen Glasfasern (GF) gegebenenfalls vor der Verbindungsherstellung eine durchschnittliche Faserlänge von 2,0 bis 10,0 mm aufweisen.

13. Faserverstärkter Verbundwerkstoff nach einem der vorhergehenden Ansprüche, wobei der Kompatibilisierungsmittels (CA) ein polar modifiziertes Polypropylen, vorzugsweise ein Maleinsäureanhydrid-gepfropftes Polypropylen, ist.

14. Faserverstärkter Verbundwerkstoff nach Anspruch 13, wobei das mit Maleinsäureanhydrid gepfropfte Polypropylen einen Maleinsäureanhydridgehalt von 0,1 bis 5,0 Gew.-% und vorzugsweise eine Schmelzflussrate $MFR_2$ (190 °C, 2,16 kg), gemessen nach ISO 1133, von 70 bis 250 g/10min aufweist.

15. Faserverstärkter Verbundwerkstoff nach einem der vorhergehenden Ansprüche, wobei der faserverstärkte Verbundwerkstoff besteht aus

(a) 35 bis 55 Gew.-%, bezogen auf den faserverstärkten Verbundwerkstoff, des Polypropylens (PP1),
(b) 20 bis 35 Gew.-%, bezogen auf den faserverstärkten Verbundwerkstoff, des heterophasigen Propylencopolymers (HECO),
(c) 15 bis 30 Gew.-%, bezogen auf den faserverstärkten Verbundwerkstoff, Glasfasern (GF),
(d) 0,5 bis 5,0 Gew.-%, bezogen auf den faserverstärkten Verbundwerkstoff, des Kompatibilisierungsmittels (CA), und
(e) 0,1 bis 5,0 Gew.-%, bezogen auf den faserverstärkten Verbundstoff, an Additiven.

**Revendications**

1. Composite renforcé de fibres comprenant

(a) de 30 à 60 % en poids, sur la base du composite renforcé de fibres, d'un polypropylène (PP1),
(b) de 10 à 40 % en poids, sur la base du composite renforcé de fibres, d'un copolymère de propylène hétérophasique (HECO), dans lequel ledit copolymère de propylène hétérophasique (HECO) comprend un homopolymère de propylène (H-PP2) et un caoutchouc d'éthylène-propylène (EPR),
(c) de 10 à 40 % en poids, sur la base du composite renforcé de fibres, de fibres de verre (GF), et
(d) de 0,05 à 5,0 % en poids, sur la base du composite renforcé de fibres, d'un agent de compatibilité (CA),
la quantité totale du polypropylène (PP1), du copolymère de propylène hétérophasique (HECO), des fibres de verre (GF) et de l'agent de compatibilité (CA) dans le composite renforcé de fibres étant au moins 95 % en poids, dans lequel en outre le polypropylène (PP1) présente

(i) un indice de fluidité à chaud $MFR_2$ (230 °C, 2,16 kg), mesuré selon ISO 1133, dans la plage de 40,0 à 250 g/10 min ;
(ii) une teneur en comonomère déterminée par NMR $^{13}C$ d'au plus 0,5 % en poids, le comonomère si présent étant de l'éthylène,
(iii) une distribution de poids moléculaire (MWD) déterminée par chromatographie par perméation de gel (GPC) dans la plage de plus de 4,5 à moins de 8,5, et
(iv) une teneur en régiodéfauts 2,1 déterminée par spectroscopie RMN $^{13}C$ dans la plage de 0,20 à 1,00 %,

dans lequel en outre l'homopolymère de propylène (H-PP2) du copolymère de propylène hétérophasique

(HECO) présente
(v) une teneur en régiodéfauts 2,1 déterminée par spectroscopie RMN $^{13}C$ dans la plage de 0 à moins de 0,10 %.

**2.** Composite renforcé de fibres selon la revendication 1, dans lequel les fibres de verre sont intégrées dans une phase continue, ladite phase continue comprend au moins 98 % en poids d'un mélange se composant de polypropylène (PP1) et du copolymère de propylène hétérophasique (HECO).

**3.** Composite renforcé de fibres selon la revendication 1 ou 2, dans lequel l'homopolymère de propylène (H-PP2) du copolymère de propylène hétérophasique (HECO) présente un indice de fluidité à chaud $MFR_2$ (230 °C, 2,16 kg) mesuré selon ISO 1133 dans la plage de 40,0 à 250 g/10 min à condition que l'indice de fluidité à chaud $MFR_2$ entre le polypropylène (PP1) et l'homopolymère de propylène (H-PP2) du copolymère de propylène hétérophasique (HECO) [$MFR_2$(PP1)/$MFR_2$(H-PP2)] soit dans la plage de 0,80 à 1,20.

**4.** Composite renforcé de fibres selon l'une des revendications précédentes, dans lequel le rapport en poids entre le mélange du propylène (PP1) et de l'homopolymère de propylène (H-PP2) et du caoutchouc d'éthylène-propylène (EPR) [((PP1)+(H-PP2)/(EPR)] est dans la plage de 75:25 à 95:5.

**5.** Composite renforcé de fibres selon l'une des revendications précédentes, dans lequel le rapport en poids entre le propylène (PP1) et l'homopolymère de propylène (H-PP2) du copolymère de propylène hétérophasique (HECO) [(PP1)/(H-PP2)] est dans la plage de 60:40 à 80:20.

**6.** Composite renforcé de fibres selon l'une des revendications précédentes, dans lequel l'homopolymère de propylène (H-PP2) du copolymère de propylène hétérophasique (HECO) présente une distribution de poids moléculaire (MWD) déterminée par chromatographie par perméation de gel (GPC) dans la plage de plus de 5,0 à moins de 10,0.

**7.** Composite renforcé de fibres selon l'une des revendications précédentes, dans lequel le copolymère de propylène hétérophasique (HECO) présente un indice de fluidité à chaud $MFR_2$ (230 °C, 2,16 kg) mesuré selon ISO 1133 dans la plage de 10 à 50 g/10 min et une teneur en éthylène déterminée par spectroscopie NMR $^{13}C$ dans la plage de 15 à 33 % mol.

**8.** Composite renforcé de fibres selon l'une des revendications précédentes, dans lequel le copolymère de propylène hétérophasique (HECO) présente une teneur en soluble à froid dans le xylène (XCS) déterminée à 25 °C selon ISO 16152 dans la plage de 22 à 45 % en poids et le copolymère de propylène hétérophasique (HECO) présente une teneur en éthylène déterminée par NMR $^{13}C$ de la fraction de soluble à froid dans le xylène (XCS) dans la plage de 40 à 60 % mol.

**9.** Composite renforcé de fibres selon l'une des revendications précédentes, dans lequel la fraction de soluble à froid dans le xylène (XCS) du copolymère de propylène hétérophasique (HECO) présente une viscosité intrinsèque (IV) mesurée selon ISO 1628/1 (à 135 °C en décaline) dans la plage de 2,0 à 5,0 dl/g.

**10.** Composite renforcé de fibres selon l'une des revendications précédentes, dans lequel le propylène (PP1) présente une fraction qui élue au-dessous de 100 °C par fractionnement par élution avec élévation de température (TREF) dans la plage de 12 à 20 % en poids.

**11.** Composite renforcé de fibres selon l'une des revendications précédentes, dans lequel le polypropylène (PP1) est un homopolymère de propylène.

**12.** Composite renforcé de fibres selon l'une des revendications précédentes, dans lequel les fibres de verre (GF) sont des fibres de verre courtes, facultativement lesdites fibres de verre (GF) courtes présentent une longueur de fibre moyenne de 2,0 à 10,0 mm avant préparation.

**13.** Composite renforcé de fibres selon l'une des revendications précédentes, dans lequel l'agent de compatibilité (CA) est un polypropylène à modification polaire, préférentiellement est un polypropylène à greffe d'anhydride maléique.

**14.** Composite renforcé de fibres selon la revendication 13, dans lequel le polypropylène à greffe d'anhydride maléique présente une teneur en anhydride maléique de 0,1 à 5,0 % en poids et préférentiellement un indice de fluidité à chaud $MFR_2$ (190 °C, 2,16 kg) mesuré selon ISO 1133 de 70 à 250 g/10 min.

**15.** Composite renforcé de fibres selon l'une des revendications précédentes, dans lequel le composite renforcé de fibres se compose de

(a) de 35 à 55 % en poids, sur la base du composite renforcé de fibres, du polypropylène (PP1),
(b) de 20 à 35 % en poids, sur la base du composite renforcé de fibres, du copolymère de propylène hétérophasique (HECO),
(c) de 15 à 30 % en poids, sur la base du composite renforcé de fibres, de fibres de verre (GF),
(d) de 0,5 à 5,0 % en poids, sur la base du composite renforcé de fibres, de l'agent de compatibilité (CA), et
(e) de 0,1 à 5,0 % en poids, sur la base du composite renforcé de fibres, d'additifs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9212182 A
- EP 0887379 A
- WO 9858976 A
- WO 2004000899 A
- WO 2004111095 A
- WO 9924478 A
- WO 9924479 A
- WO 0068315 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 9414856 A
- WO 9512622 A
- WO 2006097497 A
- WO 9219653 A
- WO 9219658 A
- EP 0572028 A


### Non-patent literature cited in the description


- **NELLO PASQUINI**. Polypropylene Handbook, 17, 18
- Plastic Additives Handbook, 1141-1190
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- Fractionation. **SOARES, J.B.P.** Encyclopedia Of Polymer Science and Technology. John Wiley & Sons, 2001, vol. 10, 75-131
- *CHEMICAL ABSTRACTS*, 6683-19-8
- *CHEMICAL ABSTRACTS*, 31570-04-4